# EUROPEAN PATENT SPECIFICATION

(11) **EP 4 595 475 B1**
(45) Date of publication and mention of the grant of the patent: **09.09.2026**
(21) Application number: 24704912.5
(22) Date of filing: 08.02.2024
(51) Int. Cl.: H04W 4/06, H04W 76/14, H04L 9/08, H04L 9/40, H04W 12/0431, H04W 12/76, H04L 67/104, H04W 4/40, H04W 92/18

(54) **PROTECTING BROADCAST RANGING AND POSITIONING MESSAGES OVER SIDELINK INTERFACE**
SCHUTZ VON RUNDFUNKENTFERNUNGSMESSUNGS- UND POSITIONIERUNGSNACHRICHTEN ÜBER EINE SIDELINK-SCHNITTSTELLE
PROTECTION DE LA DIFFUSION DE MESSAGES DE TÉLÉMÉTRIE ET DE POSITIONNEMENT SUR UNE INTERFACE DE LIAISON LATÉRALE

(30) Priority: 09.02.2023 US 202363484040 P; 07.02.2024 US 202418435709
(43) Date of publication of application: 06.08.2025
(73) Proprietor: Lenovo (Singapore) Pte. Ltd., Singapore 556741 (SG)
(72) Inventor: KUNZ, Andreas, 68526 Ladenburg (DE); THOMAS, Robin Rajan, 60489 Frankfurt (DE); BASKARAN, Sheeba Backia Mary, 61381 Friedrichsdorf (DE); CHOI, Hyung-Nam, 85521 Ottobrunn (DE)
(74) Representative: Openshaw & Co.
(86) International application number: PCT/IB2024/051177
(87) International publication number: WO 2024/166038

(56) References cited:
- WO-A1-2022/054942
- WO-A1-2022/195487
- WO-A1-2022/216345
- US-A1- 2021 067 960

## Description

### RELATED APPLICATION

This application claims priority to U.S. Patent Application Serial No. 63/484,040 filed February 9, 2023 entitled "PROTECTING BROADCAST RANGING AND POSITIONING MESSAGES OVER SIDELINK INTERFACE," the disclosure of which is incorporated by reference herein in its entirety. This application also claims priority to U.S. Patent Application Serial No. 18/435,709 filed February 7, 2024 entitled "PROTECTING BROADCAST RANGING AND POSITIONING MESSAGES OVER SIDELINK INTERFACE".

### TECHNICAL FIELD

The present disclosure relates to wireless communications, and more specifically to protecting broadcast ranging and positioning messages over sidelink (SL) interface.

### BACKGROUND

A wireless communications system may include one or multiple network communication devices, such as base stations, which may be otherwise known as an eNodeB (eNB), a next-generation NodeB (gNB), or other suitable terminology. Each network communication devices, such as a base station may support wireless communications for one or multiple user communication devices, which may be otherwise known as user equipment (UE), or other suitable terminology. The wireless communications system may support wireless communications with one or multiple user communication devices by utilizing resources of the wireless communication system (e.g., time resources (e.g., symbols, slots, subframes, frames, or the like) or frequency resources (e.g., subcarriers, carriers). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

Situations arise in a wireless communications system where it is desirable to know a location of a UE. Various different ranging or positioning procedures may be used to determine the location of a UE. One such ranging or positioning procedure uses SL positioning where the UE receives information from other nearby UEs, and the location of the UE can be determined from this received information.

WO2022216345A1 discloses a target user equipment, UE, receives discovery messages from peer UEs. Each discovery message indicates a subset of capabilities associated with a peer UE to participate in a sidelink positioning session. The target UE sends an interest message to the peer UEs indicating that the target UE intends to have the peer UEs participate in the sidelink positioning session and receives capability messages from the peer UEs indicating additional capabilities associated with each of the peer UEs. The target UE sends a selection message to at least one peer UE to participate in the sidelink positioning session based on the subset of capabilities and the additional capabilities associated with the at least one peer UE. The selection message requests the at least one peer UE participate in the sidelink positioning session with the target UE.

### SUMMARY

The invention is defined by the appended independent claims.

The present disclosure relates to methods, apparatuses, and systems that support protecting broadcast ranging and positioning messages over sidelink interface. An initiator UE can initiate a ranging or positioning procedure with secondary UEs that are in close proximity with the initiator. The initiator UE sends a SL broadcast message with a requested positioning or ranging action, along with a temporary group identity or identifier (ID). The secondary UEs perform the requested positioning or ranging action and return their results to the initiator UE. The results are protected (e.g., encrypted) using one or more keys associated with the temporary group ID. These one or more keys may be a group broadcast key known by all of the secondary UEs, or individual broadcast keys for the individual secondary UEs. By using the keys, SL positioning assistance data and location information is protected during the communication.

Some implementations of the method and apparatuses described herein may further include: receiving, from a first device, a first signaling indicating a broadcast authorization request message that includes an identity of the first device and a location identity for the first device; transmitting, to the first device, a second signaling indicating a broadcast authorization response message that includes a temporary group identifier and a validity time; receiving, from a second device, a third signaling indicating a sidelink broadcast key request that includes the temporary group identifier, the identity of the first device, an identity of the second device, and a location identity for the second device; and transmitting, to the second device, a fourth signaling indicating a sidelink broadcast key response message that includes a broadcast key.

In some implementations of the method and apparatuses described herein, further comprise: transmitting, to a third device, a fifth signaling indicating an authorization request message that includes the identity of the first device and the location identity; receiving, from the third device, a sixth signaling indicating a successful authorization result of the first device; and transmitting, in response to the sixth signaling, the second signaling to the first device. Additionally or alternatively, the method and apparatuses described herein further comprise: assigning the temporary group identifier to the first device. Additionally or alternatively, the method and apparatuses described herein further comprise: generating a group broadcast key for a broadcast associated with the broadcast authorization request message, wherein the broadcast authorization response message further includes the group broadcast key; and generating the validity time. Additionally or alternatively, the method and apparatuses described herein further comprise: verifying whether the sidelink broadcast key request message is received from the second device within the validity time; and transmitting, in response to the sidelink broadcast key request message being received from the second device within the validity time, the fourth signaling to the second device. Additionally or alternatively, the method and apparatuses described herein further comprise: transmitting, to a third device, a fifth signaling indicating a sidelink authorization request that includes the identity of the first device, the identity of the second device, and the location identity; receiving, from the third device, a sixth signaling indicating an authorization result based on whether the first device and the second device are have a same location identity; and transmitting, in response to the sidelink broadcast key request message being received from the second device within the validity time and the first device and the second device having the same location identity, the fourth signaling to the second device. Additionally or alternatively, the broadcast key comprises a group broadcast key, the second signaling includes the group broadcast key, and the method and apparatuses further comprises: transmitting, to one or more additional UEs, one or more additional signalings indicating the group broadcast key. Additionally or alternatively, the broadcast key comprises a first individual broadcast key for the second device, and the method and apparatus further comprises: transmitting, to a third device, fifth signaling indicating a second individual broadcast key for the third device. Additionally or alternatively, the method and apparatuses described herein further comprise: transmitting, to the first device, a sixth signaling indicating a pairing of the first individual broadcast key with the second device and a pairing of the second individual broadcast key with the third device. Additionally or alternatively, the method is implemented by a sidelink positioning key management function, the first device comprises a first user equipment, and the second device comprises a second user equipment.

Some implementations of the method and apparatuses described herein may further include: receiving, from a first device, a first signaling indicating an authorization request message that includes an identity of a second device and a location identity for the second device; transmitting, to the first device, a second signaling indicating a successful authorization result for the first device; receiving, from the first device, a third signaling indicating a sidelink authorization request that includes the identity of the second device, the identity of a third device, and a location identity for the third device; and transmitting, to the first device, a fourth signaling indicating an authorization result for the sidelink authorization request.

In some implementations of the method and apparatuses described herein, further comprise: storing the location identity for the second device. Additionally or alternatively, the method and apparatuses described herein further comprise: checking, based on the location identity for the second device and the location identity for the third device, whether the second device and the third device have a same location identity; and transmitting, in response to the second device and the third device having the same location identity, the fourth signaling to the first device. Additionally or alternatively, the method is implemented in a ranging server, the first device implements a sidelink positioning key management function, the second device comprises a first user equipment, and the third device comprises a second user equipment.

Some implementations of the method and apparatuses described herein may further include: receiving, from a first device, a first signaling indicating a sidelink broadcast message with a requested positioning or ranging action that includes an identity of the first device and a temporary group identifier; transmitting, to a second device, a second signaling indicating a sidelink broadcast key request that includes the temporary group identifier, the identity of the first device, an identity of an apparatus implementing the method, and a location identity for the apparatus; and receiving, from the second device, a third signaling indicating a sidelink broadcast key response message.

In some implementations of the method and apparatuses described herein, the sidelink broadcast key response message includes a broadcast key in response to the sidelink broadcast key request message being transmitted to the second device within a validity time as well as a device implementing the method and the first device having a same location identity. Additionally or alternatively, the sidelink broadcast key response message includes a group broadcast key that is also received by one or more additional apparatuses. Additionally or alternatively, the sidelink broadcast key response message includes an individual broadcast key for a device implementing the method. Additionally or alternatively, the method is implemented by a first user equipment, the first device comprises a second user equipment, and the second device comprises a device that implements a sidelink positioning key management function.

Some implementations of the method and apparatuses described herein may further include: transmitting, to a first device, a first signaling indicating a broadcast authorization request message that includes an identity of an apparatus implementing the method and a location identity for the apparatus; receiving, from the first device, a second signaling indicating a broadcast authorization response message that includes a temporary group identifier and a validity time; transmitting, to a second device, a third signaling indicating a sidelink broadcast message with a requested positioning or ranging action that includes an identity of the apparatus and the temporary group identifier; receiving, from the first device, a fourth signaling indicating a broadcast key; establishing, with the second device and using the broadcast key, a protocol for sidelink positioning procedures (SLPP) session; and receiving, from the second device, a fifth signaling indicating a result of the requested positioning or ranging action that is protected with the broadcast key.

In some implementations of the method and apparatuses described herein, the second signaling and the fourth signaling are a same signaling, and the broadcast key comprises a group broadcast key that is also received by one or more additional devices. Additionally or alternatively, the broadcast key comprises an individual broadcast key for a device implementing the method. Additionally or alternatively, the method is implemented by a first user equipment, the first device comprises a device that implements a sidelink positioning key management function, and the second device comprises a second UE.

### BRIEF DESCRIPTION OF THE DRAWINGS

FIG. 1 illustrates an example of a wireless communications system that supports protecting broadcast ranging and positioning messages over sidelink interface in accordance with aspects of the present disclosure.
FIGs. 2A, 2B, and 2C illustrate an example of ad-hoc group creation for broadcast SL positioning that supports protecting broadcast ranging and positioning messages over sidelink interface in accordance with aspects of the present disclosure.
FIGs. 3A, 3B, and 3C illustrate another example of ad-hoc group creation for broadcast SL positioning that supports protecting broadcast ranging and positioning messages over sidelink interface in accordance with aspects of the present disclosure.
FIGs. 4 and 5 illustrate examples of block diagrams of devices that support protecting broadcast ranging and positioning messages over sidelink interface in accordance with aspects of the present disclosure.
FIGs. 6 through 14 illustrate flowcharts of methods that support protecting broadcast ranging and positioning messages over sidelink interface in accordance with aspects of the present disclosure.

### DETAILED DESCRIPTION

An initiator UE can initiate a ranging or positioning procedure with UEs in proximity with broadcast messages. This ranging or positioning is typically based on the proximity services (ProSe) feature, which does not provide any security for broadcast. Broadcast refers to communication from one device in the wireless communications system to all devices in the wireless communications system within wireless range of the device. Thus, broadcast messages are sent from one device (e.g., the initiator UE or a secondary UE) to all devices in the wireless communications system within range of the device. Accordingly, SL positioning assistance data and location information transmitted by UEs in proximity of the initiator UE are not protected during the broadcast communication.

Using the techniques discussed herein, an initiator UE sends a broadcast authorization request message to a sidelink positioning key management function (SLPKMF). The broadcast authorization request message includes an identity of the initiator UE and a location identity (e.g., a zone ID) for the initiator UE. The SLPKMF responds with a broadcast authorization message that includes a temporary group ID and a validity time. The initiator UE sends a SL broadcast message with a requested positioning or ranging action, along with the identity of the initiator UE and the temporary group ID. The secondary UEs receive the SL broadcast message and each sends a SL broadcast key request to the SLPKMF. The SL broadcast key request includes the temporary group identifier, the identity of the initiator UE, an identity of the secondary UE, and a location identity for the secondary UE. The SLPKMF returns to the secondary UEs, if the SL broadcast key request is received within the validity time, a SL broadcast key response message that includes a broadcast key. The broadcast key can be a group broadcast key that is the same for all of the secondary UEs, or the SLPKMF may send a different individual broadcast key to each of the different secondary UEs. The secondary UEs perform the requested positioning or ranging action and return their results to the initiator UE. Each secondary UE protects (e.g., encrypts) its results using the broadcast key it received from the SLPKMF.

Typical SL ranging or positioning procedures are based on the ProSe feature, which does not provide any security for broadcast messages. By using the keys discussed herein, SL positioning assistance data and location information is protected during the communication. One solution to protecting SL positioning assistance data and location information is preconfiguring a group of UEs with a security context (e.g., security keys), allowing the group of UEs to communicate securely. However, for broadcast, the UEs that will receive a SL broadcast message with a requested positioning or ranging action are unknown. Accordingly, those UEs cannot be preconfigured with a security context. Or, if all UEs were preconfigured with the same security context, then there is no point in performing the security since all UEs can decrypt the messages as they have the same keys. The techniques discussed herein allow an ad-hoc temporary group only for the requested positioning or ranging action, one or more broadcast keys to be associated with that temporary group, and the one or more broadcast keys used to protect the results of the requested positioning or ranging action that are returned to the initiator UE.

Aspects of the present disclosure are described in the context of a wireless communications system. Aspects of the present disclosure are further illustrated and described with reference to device diagrams and flowcharts.

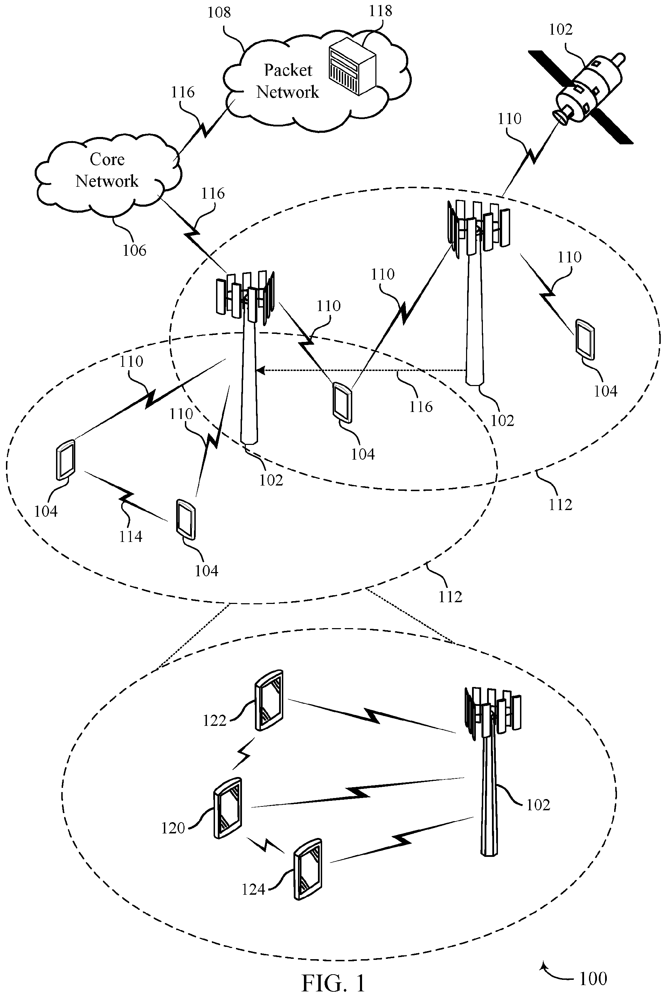

FIG. 1 illustrates an example of a wireless communications system 100 that supports protecting broadcast ranging and positioning messages over sidelink interface in accordance with aspects of the present disclosure. The wireless communications system 100 may include one or more network entities 102, one or more UEs 104, a core network 106, and a packet data network 108. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a 5G network, such as an NR network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G. Additionally, the wireless communications system 100 may support technologies, such as time division multiple access (TDMA), frequency division multiple access (FDMA), or code division multiple access (CDMA), etc.

The one or more network entities 102 may be dispersed throughout a geographic region to form the wireless communications system 100. One or more of the network entities 102 described herein may be or include or may be referred to as a network node, a base station, a network element, a radio access network (RAN), a base transceiver station, an access point, a NodeB, an eNodeB (eNB), a next-generation NodeB (gNB), or other suitable terminology. A network entity 102 and a UE 104 may communicate via a communication link 110, which may be a wireless or wired connection. For example, a network entity 102 and a UE 104 may perform wireless communication (e.g., receive signaling, transmit signaling) over a Uu interface.

A network entity 102 may provide a geographic coverage area 112 for which the network entity 102 may support services (e.g., voice, video, packet data, messaging, broadcast, etc.) for one or more UEs 104 within the geographic coverage area 112. For example, a network entity 102 and a UE 104 may support wireless communication of signals related to services (e.g., voice, video, packet data, messaging, broadcast, etc.) according to one or multiple radio access technologies. In some implementations, a network entity 102 may be moveable, for example, a satellite associated with a non-terrestrial network. In some implementations, different geographic coverage areas 112 associated with the same or different radio access technologies may overlap, but the different geographic coverage areas 112 may be associated with different network entities 102. Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The one or more UEs 104 may be dispersed throughout a geographic region of the wireless communications system 100. A UE 104 may include or may be referred to as a mobile device, a wireless device, a remote device, a remote unit, a handheld device, or a subscriber device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples. In some implementations, a UE 104 may be stationary in the wireless communications system 100. In some other implementations, a UE 104 may be mobile in the wireless communications system 100.

The one or more UEs 104 may be devices in different forms or having different capabilities. Some examples of UEs 104 are illustrated in FIG. 1. A UE 104 may be capable of communicating with various types of devices, such as the network entities 102, other UEs 104, or network equipment (e.g., the core network 106, the packet data network 108, a relay device, an integrated access and backhaul (IAB) node, or another network equipment), as shown in FIG. 1. Additionally, or alternatively, a UE 104 may support communication with other network entities 102 or UEs 104, which may act as relays in the wireless communications system 100.

A UE 104 may also be able to support wireless communication directly with other UEs 104 over a communication link 114. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link 114 may be referred to as a sidelink. For example, a UE 104 may support wireless communication directly with another UE 104 over a PC5 interface.

A network entity 102 may support communications with the core network 106, or with another network entity 102, or both. For example, a network entity 102 may interface with the core network 106 through one or more backhaul links 116 (e.g., via an S1, N2, N6, or another network interface). The network entities 102 may communicate with each other over the backhaul links 116 (e.g., via an X2, Xn, or another network interface). In some implementations, the network entities 102 may communicate with each other directly (e.g., between the network entities 102). In some other implementations, the network entities 102 may communicate with each other or indirectly (e.g., via the core network 106). In some implementations, one or more network entities 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmission-reception points (TRPs).

In some implementations, a network entity 102 may be configured in a disaggregated architecture, which may be configured to utilize a protocol stack physically or logically distributed among two or more network entities 102, such as an integrated access backhaul (IAB) network, an open RAN (O-RAN) (e.g., a network configuration sponsored by the O-RAN Alliance), or a virtualized RAN (vRAN) (e.g., a cloud RAN (C-RAN)). For example, a network entity 102 may include one or more of a central unit (CU), a distributed unit (DU), a radio unit (RU), a RAN Intelligent Controller (RIC) (e.g., a Near-Real Time RIC (Near-RT RIC), a Non-Real Time RIC (Non-RT RIC)), a Service Management and Orchestration (SMO) system, or any combination thereof.

An RU may also be referred to as a radio head, a smart radio head, a remote radio head (RRH), a remote radio unit (RRU), or a transmission reception point (TRP). One or more components of the network entities 102 in a disaggregated RAN architecture may be co-located, or one or more components of the network entities 102 may be located in distributed locations (e.g., separate physical locations). In some implementations, one or more network entities 102 of a disaggregated RAN architecture may be implemented as virtual units (e.g., a virtual CU (VCU), a virtual DU (VDU), a virtual RU (VRU)).

Split of functionality between a CU, a DU, and an RU may be flexible and may support different functionalities depending upon which functions (e.g., network layer functions, protocol layer functions, baseband functions, radio frequency functions, and any combinations thereof) are performed at a CU, a DU, or an RU. For example, a functional split of a protocol stack may be employed between a CU and a DU such that the CU may support one or more layers of the protocol stack and the DU may support one or more different layers of the protocol stack. In some implementations, the CU may host upper protocol layer (e.g., a layer 3 (L3), a layer 2 (L2)) functionality and signaling (e.g., Radio Resource Control (RRC), service data adaption protocol (SDAP), Packet Data Convergence Protocol (PDCP)). The CU may be connected to one or more DUs or RUs, and the one or more DUs or RUs may host lower protocol layers, such as a layer 1 (L1) (e.g., physical (PHY) layer) or an L2 (e.g., radio link control (RLC) layer, medium access control (MAC) layer) functionality and signaling, and may each be at least partially controlled by the CU.

Additionally, or alternatively, a functional split of the protocol stack may be employed between a DU and an RU such that the DU may support one or more layers of the protocol stack and the RU may support one or more different layers of the protocol stack. The DU may support one or multiple different cells (e.g., via one or more RUs). In some implementations, a functional split between a CU and a DU, or between a DU and an RU may be within a protocol layer (e.g., some functions for a protocol layer may be performed by one of a CU, a DU, or an RU, while other functions of the protocol layer are performed by a different one of the CU, the DU, or the RU).

A CU may be functionally split further into CU control plane (CU-CP) and CU user plane (CU-UP) functions. A CU may be connected to one or more DUs via a midhaul communication link (e.g., F1, F1-c, F1-u), and a DU may be connected to one or more RUs via a fronthaul communication link (e.g., open fronthaul (FH) interface). In some implementations, a midhaul communication link or a fronthaul communication link may be implemented in accordance with an interface (e.g., a channel) between layers of a protocol stack supported by respective network entities 102 that are in communication via such communication links.

The core network 106 may support user authentication, access authorization, tracking, connectivity, and other access, routing, or mobility functions. The core network 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a Packet Data Network (PDN) gateway (P-GW), a user plane function (UPF)), or a location management function (LMF), which is a control plane entity that manages location services. In some implementations, the control plane entity may manage non-access stratum (NAS) functions, such as mobility, authentication, and bearer management (e.g., data bearers, signal bearers, etc.) for the one or more UEs 104 served by the one or more network entities 102 associated with the core network 106.

The core network 106 may communicate with the packet data network 108 over one or more backhaul links 116 (e.g., via an S1, N2, N6, or another network interface). The packet data network 108 may include an application server 118. In some implementations, one or more UEs 104 may communicate with the application server 118. A UE 104 may establish a session (e.g., a protocol data unit (PDU) session, or the like) with the core network 106 via a network entity 102. The core network 106 may route traffic (e.g., control information, data, and the like) between the UE 104 and the application server 118 using the established session (e.g., the established PDU session). The PDU session may be an example of a logical connection between the UE 104 and the core network 106 (e.g., one or more network functions of the core network 106).

In the wireless communications system 100, the network entities 102 and the UEs 104 may use resources of the wireless communication system 100 (e.g., time resources (e.g., symbols, slots, subframes, frames, or the like) or frequency resources (e.g., subcarriers, carriers) to perform various operations (e.g., wireless communications). In some implementations, the network entities 102 and the UEs 104 may support different resource structures. For example, the network entities 102 and the UEs 104 may support different frame structures. In some implementations, such as in 4G, the network entities 102 and the UEs 104 may support a single frame structure. In some other implementations, such as in 5G and among other suitable radio access technologies, the network entities 102 and the UEs 104 may support various frame structures (i.e., multiple frame structures). The network entities 102 and the UEs 104 may support various frame structures based on one or more numerologies.

One or more numerologies may be supported in the wireless communications system 100, and a numerology may include a subcarrier spacing and a cyclic prefix. A first numerology (e.g., *µ*=0) may be associated with a first subcarrier spacing (e.g., 15 kHz) and a normal cyclic prefix. The first numerology (e.g., *µ*=0) associated with the first subcarrier spacing (e.g., 15 kHz) may utilize one slot per subframe. A second numerology (e.g., *µ*=1) may be associated with a second subcarrier spacing (e.g., 30 kHz) and a normal cyclic prefix. A third numerology (e.g., *µ*=2) may be associated with a third subcarrier spacing (e.g., 60 kHz) and a normal cyclic prefix or an extended cyclic prefix. A fourth numerology (e.g., *µ*=3) may be associated with a fourth subcarrier spacing (e.g., 120 kHz) and a normal cyclic prefix. A fifth numerology (e.g., *µ*=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. Each slot may include a number (e.g., quantity) of symbols (e.g., orthogonal frequency division multiplexing (OFDM) symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., *µ*=0) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the network entities 102 and the UEs 104 may perform wireless communications over one or more of the operating frequency bands. In some implementations, FR1 may be used by the network entities 102 and the UEs 104, among other equipment or devices for cellular communications traffic (e.g., control information, data). In some implementations, FR2 may be used by the network entities 102 and the UEs 104, among other equipment or devices for short-range, high data rate capabilities.

FR1 may be associated with one or multiple numerologies (e.g., at least three numerologies). For example, FR1 may be associated with a first numerology (e.g., *µ*=0), which includes 15 kHz subcarrier spacing; a second numerology (e.g., *µ*=1), which includes 30 kHz subcarrier spacing; and a third numerology (e.g., *µ*=2), which includes 60 kHz subcarrier spacing. FR2 may be associated with one or multiple numerologies (e.g., at least 2 numerologies). For example, FR2 may be associated with a third numerology (e.g., *µ*=2), which includes 60 kHz subcarrier spacing; and a fourth numerology (e.g., *µ*=3), which includes 120 kHz subcarrier spacing.

Security aspects of ranging based services and sidelink positioning, particularly protection of groupcast or broadcast, is discussed herein. Accordingly, the following is taken into consideration. Using protocol for SLPP, unicast messages between UEs may be a baseline for SL positioning. In addition, sending part of SLPP positioning signaling among UEs via broadcast or groupcast is also possible. Unicast (one-to-one operation) may be assumed as baseline for exchange of SLPP signaling between UEs. Unicast SLPP session-based operation is supported. At least centralized operation is supported, e.g., operation where one UE performs range and/or position calculations based on measurement or location information relating to itself and/or other UEs. It is feasible to send at least the following positioning signaling for groupcast or broadcast (in addition to unicast): SL positioning capability and SL positioning assistance data. Location information may also be included.

Security issues on how to protect the SL groupcast or broadcast messages is considered. The security issues (e.g., requirements for ciphering and/or integrity) on specific information of SL positioning capability and assistance data in groupcast or broadcast, and the use cases for applying groupcast or broadcast, are taken into consideration. Failures to protect SL groupcast or broadcast communications leading to the following threats is also taken into consideration: passive attackers can eavesdrop on privacy sensitive data exchanged between UEs, active attackers can intercept, modify or replay data packets exchanged between UEs, and the broadcasting or groupcasting UE may be impersonated by an attacker.

The techniques discussed herein provide solutions to address the protection of SL groupcast or broadcast communications.

Using the techniques discussed herein, a UE 120, referred to as an initiator UE, sends a broadcast authorization request message to a network entity 102 that implements an SLPKMF. The broadcast authorization request message includes an identity of the UE 120 and a location identity (e.g., a zone ID) for the UE 120. The network entity 102 responds with a broadcast authorization message that includes a temporary group ID and a validity time. The UE 120 sends a SL broadcast message with a requested positioning or ranging action, along with the identity of the initiator UE and the temporary group ID. One or more secondary UEs 122 and 124 receive the SL broadcast message and each secondary UE 122 and 124 sends a SL broadcast key request to the network entity 102. The SL broadcast key request includes the temporary group identifier, the identity of the UE 120, an identity of the secondary UE 122 or 124, and a location identity for the secondary UE 122 or 124. The network entity 102 returns to the secondary UEs 122 and 124, if the SL broadcast key request is received within the validity time, a SL broadcast key response message that includes a broadcast key. The broadcast key can be a group broadcast key that is the same for all of the secondary UEs 122 and 124, or the network entity 102 may send a different individual broadcast key to each of the different secondary UEs 122 and 124. The secondary UEs 122 and 124 perform the requested positioning or ranging action and return their results to the UE 120 via one or more SL communication. Each secondary UE 122 and 124 protects its results (e.g., encrypts the results or the SL communication) using the broadcast key it received from the network entity 102.

Communication between devices discussed herein, such as between UEs 104 and network entities 102, is performed using any of a variety of different signaling. For example, such signaling can be any of various messages, requests, or responses, such as triggering messages, configuration messages, and so forth. By way of another example, such signaling can be any of various signaling mediums or protocols over which messages are conveyed, such as any combination of radio resource control (RRC), downlink control information (DCI), uplink control information (UCI), sidelink control information (SCI), medium access control element (MAC-CE), SLPP, PC5 radio resource control (PC5-RRC) and so forth.

The below terms are used to refer to roles of particular UEs or devices participating in a SL positioning session. The techniques discussed herein may be applicable to all of the these UE roles.

An initiator device refers to a device that initiate a SL positioning or ranging session, and may be a network entity, (e.g., gNB, LMF), a UE, a roadside unit (RSU), and so forth.

A responder device refers to a device that responds to a SL positioning or ranging session from an initiator device, and may be a network entity, (e.g., gNB, LMF), a UE, an RSU, and so forth.

A target UE may be referred to as a UE of interest whose position (absolute or relative) is to be obtained by the network or by the UE itself.

Sidelink positioning refers to a positioning UE (e.g., an initiator device) using reference signals transmitted over SL (e.g., PC5 interface) to obtain an absolute position, a relative position, or ranging information.

Ranging refers to a determination of one or both of the distance and the direction between a UE and another entity (e.g., an anchor UE).

An anchor UE refers to a UE supporting positioning of target UE, e.g., by transmitting or receiving reference signals for positioning, providing positioning-related information, and so forth over the SL interface. An anchor UE may also be referred to as a SL reference UE.

An assistant UE refers to a UE supporting ranging or sidelink between a SL Reference UE and a target UE over PC5, when the direct ranging or sidelink positioning between the SL reference UE or anchor UE and the target UE cannot be supported. The measurement or results of the ranging or sidelink positioning between the assistant UE and the SL reference UE and that between the assistant UE and the target UE are determined and used to derive the ranging or sidelink positioning results between the target UE and the SL reference UE.

A SL positioning server UE refers to a UE offering location calculation for SL positioning and ranging based service. The SL positioning server interacts with other UEs over PC5 as necessary in order to calculate the location of the target UE. The target UE or SL reference UE can act as a SL positioning server UE if location calculation is supported.

A SL positioning client UE refers to a third-party UE, other than SL reference UE and target UE, which initiates ranging or sidelink positioning service request on behalf of the application residing on it. It should be noted that the SL positioning client UE does not have to support ranging or sidelink positioning capability, but a communication between the SL positioning client UE and SL reference UE or target UE.

In one or more implementations, the protecting broadcast ranging and positioning messages over sidelink interface establishes a temporary group for broadcast responders. The protection is more on the responses from the participating UEs of the ranging or positioning action, since the SL positioning capability, SL positioning assistance data and location information is not to be leaked to other UEs not participating in the SLPP procedure. Additionally or alternatively, the security protection may extend to the request and response pair of messages for SL positioning capability, SL positioning assistance data and location information. Additionally or alternatively, the security protection may also extend to the SL positioning error message indication from one SL positioning UE to another. Therefore, the UEs responding to the broadcast request from an initiator UE will form an ad-hoc temporary group only for the requested action, which will be protected with one key per group or individual keys per participating UE. This temporary group may include SL UEs or nodes (e.g., anchor UE, target UE, etc.) that are interested or necessary for performing SL positioning including absolute or relative location estimation or ranging for at least one distance, direction, or orientation. The temporary nature of the group may include a set of validity criteria based on temporal criteria including but not limited to validity timer, time window, and so forth. Additionally or alternatively, the temporary nature of the group may include a set of validity criteria based on spatial criteria such as geographic proximity location information including but limited to cell ID, zone ID, beam ID, 2D or 3D location coordinates, and so forth.

The implementation of a SLPKMF can be standalone or collocated with the SL positioning application or ranging application server, which may be implemented as an application function (AF), application server (AS) or a network function (NF), and could be also collocated with the unified data management (UDM), LMF, and so forth. Both the SLPKMF and the NF may be implemented in the network for in-coverage usage or within an authorized UE for out of coverage usage.

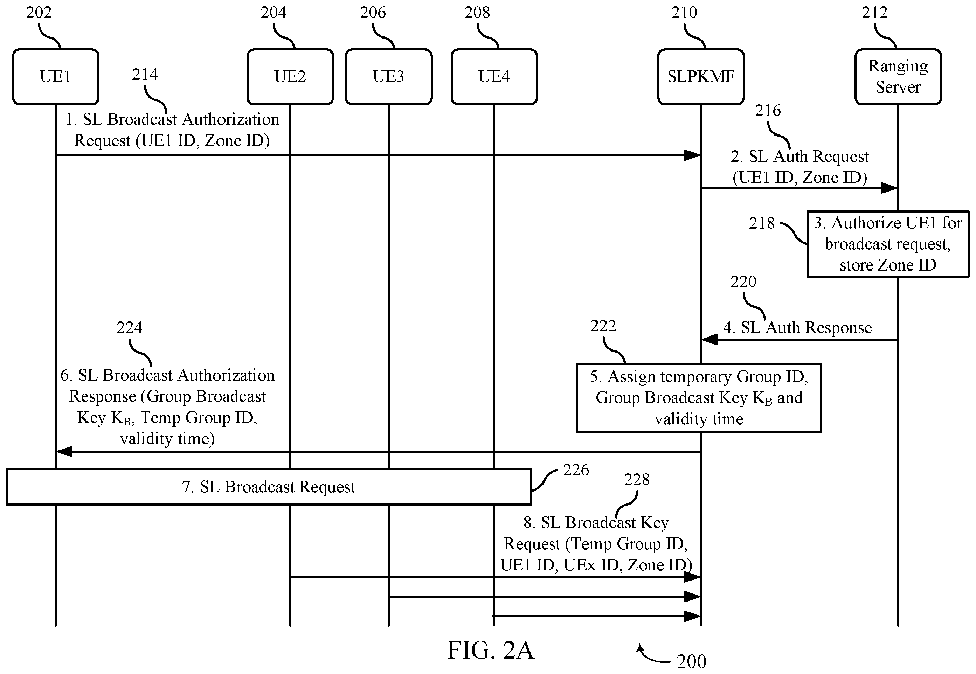

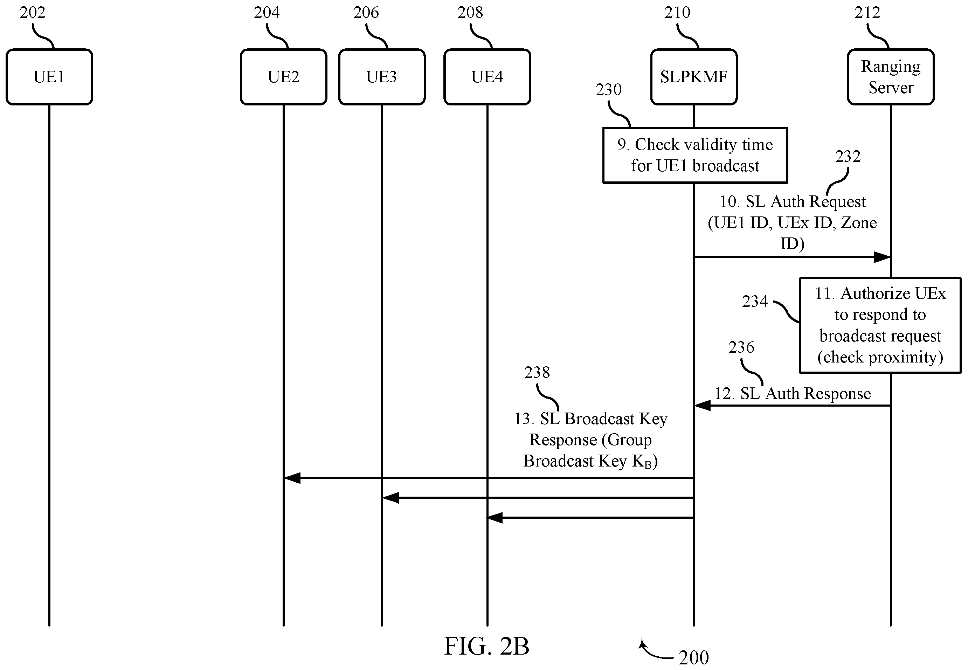

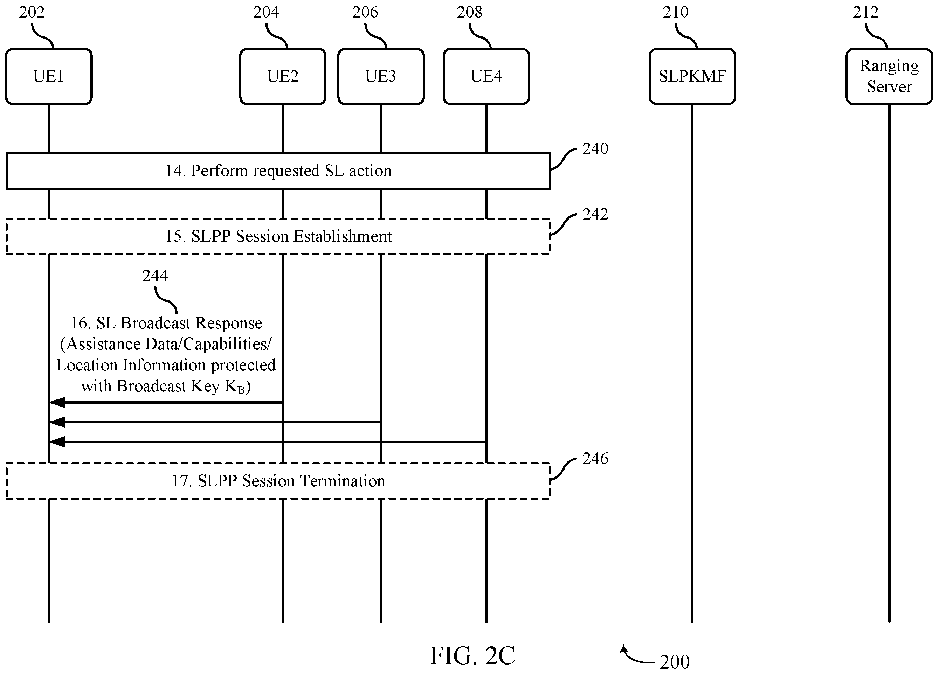

FIGs. 2A, 2B, and 2C illustrate an example 200 of ad-hoc group creation for broadcast SL positioning that supports protecting broadcast ranging and positioning messages over sidelink interface in accordance with aspects of the present disclosure. The example 200 includes a UE 202 (also referred to as an initiating or initiator UE), multiple additional UEs 204, 206, and 208 (each also referred to as a participating or secondary UE), an SLPKMF 210, and a ranging server 212. The SLPKMF 210 can be implemented on the same device as the ranging server 212 or on a separate device. In one or more implementations, the SLPKMF 210 is implemented in a UE. Although three participating UEs 204, 206, and 208 are illustrated, it should be noted that the techniques discussed herein may be used with any number of participating UEs.

At 214, the UE 202 wants to initiate an SL broadcast authorization request and sends a broadcast authorization request message to the SLPKMF 210 including the ID of the UE 202 and a zone ID where the UE 202 is located. The zone ID may also be referred to as a location identity. The zone ID identifies a zone in which the UE 202 is located, where the zone is a particular physical location or an approximate physical area in which the UE 202 is located. The zone ID can be provided by the UE 202 provided the UE 202 has the capabilities to provide such information, e.g., the UE 202 has global navigation satellite system (GNSS) capability to compute its own absolute location with the Zone ID being computed based on the following set of equations: ${x}_{1} = Floor \left(x/L\right) Mod 64 ,$ ${y}_{1} = Floor \left(y/L\right) Mod 64 ,$ $Zone_id = {y}_{1} * 64 + {x}_{1} ,$ where L is the value of sl-ZoneLength included in an RRC message or information element (IE), e.g., sl-ZoneConfig, x is the geodesic distance in longitude between the current location of the UE 202 and geographical coordinates (0, 0) according to a world geodetic system 84 (WGS84) model and is expressed, e.g., in meters, y is the geodesic distance in latitude between the current location of the UE 202 and geographical coordinates (0, 0) according to the WGS84 model and is expressed, e.g., in meters.

At 216, the SLPKMF 210 sends an authorization request (e.g., an authorization request message) of the UE 202 for broadcast requests to the ranging server 212. The authorization request includes the ID of UE 202 and the zone ID for the UE 202.

At 218, the ranging server 212 authorizes the request, e.g., based on the UE 202 subscription. The ranging server 212 also stores the Zone ID corresponding to the UE 202.

At 220, the ranging server provides the authorization result to the SLPKMF 210.

At 222, the SLPKMF 210 assigns a temporary group ID and generates a group broadcast key K_{B} for the broadcast communication. The SLPKMF 210 also sets a validity time for the broadcast procedure, e.g., UEs responding to the broadcast request as discussed below have to respond within the validity time. Additionally, in one or more implementations the group broadcast key K_{B} in the participating UEs 204, 206, and 208 are to be removed after expiration of the validity time. Accordingly, the SLPKMF 210 sets the validity time to allow the positioning or ranging action to complete. The validity time can be specified in various manners, such as a fixed time (e.g., the current time plus a particular number of milliseconds).

At 224, the SLPKMF 210 provides the temporary group ID, the group broadcast key K_{B}, and the validity time to the UE 202 in a broadcast authorization response message.

At 226, the UE 202 sends a SL broadcast message with a requested positioning or ranging action, the ID of UE 202, and the temporary group ID.

At 228, each of the UE 204, the UE 206, and the UE 208 receives the SL broadcast message from the UE 202 and sends a broadcast key request to the SLPKMF 210. The broadcast key request includes the temporary group ID, the ID of UE 202, the ID of the UE sending the broadcast key request (e.g., the ID of UE 204, UE 206, or UE 208), and a location identity (e.g., zone ID) of the UE sending the broadcast key request (e.g., the ID of UE 204, UE 206, or UE 208) indicating the local area where the UE sending the broadcast key request is located.

At 230, the SLPKMF 210 checks whether the UE will respond within the validity time of the broadcast request (e.g., whether the broadcast key request is received from the UE 204, UE 206, or UE 208 within the validity time or at least a threshold amount of time before the validity time). In one or more implementations, the SLPKMF 210 sends an authorization request to the ranging server 212 if the UE will respond within the validity time of the broadcast request. Additionally or alternatively, if the UE will not respond within the validity time of the broadcast request, the SLPKMF 210 need not send the authorization request to the ranging server 212 and may send a rejection indication or message to the UE 202 indicating that the requested SL ranging or positioning action is rejected or denied (e.g., and thus is not performed).

At 232, the SLPKMF 210 sends an authorization request to the ranging server 212. The SLPKMF 210 may send individual requests per UE or accumulate the requests of all UEs responding to the same temporary group ID and initiator ID (ID of UE 202). The authorization request includes the ID of UE 202, the ID of the responder UE (UE 204, UE 206, or UE 208), and the location ID (e.g., zone ID) of the responder UE (UE 204, UE 206, or UE 208).

At 234, the ranging server 212 authorizes the request of the participating UEs and may check whether all participating UEs are located in the same Zone or location, also referred to as a proximity check. For example, the ranging server 212 compares the location identity provided by the UE 202 at 216 with the location identities from the UEs 204, 206, and 208. If the location identities (e.g., zones) of the UE 202 and at least one responding UE 204, 206, or 208 are different, the ranging server 212 may reject the authorization. If the location identities (e.g., zones) of the UE 202 and the responding UEs 204, 206, and 208 are the same (or within a threshold amount of being the same), the ranging server 212 may accept or approve the authorization.

At 236, the ranging server 212 provides the authorization result to the SLPKMF 210. Depending on the request at 232, the ranging server 212 may send individual responses per UE 204, 206, and 208, or an accumulated response for all responding UEs 204, 206, and 208.

At 238, the SLPKMF 210 provides the group broadcast key K_{B} generated at 222 to all responding UEs 204, 206, and 208. In one or more implementations, the SLPKMF 210 provides the group broadcast key K_{B} to all responding UEs 204, 206, and 208 in response to the authorization result at 236 indicating approval. Additionally or alternatively, if the authorization result at 236 indicates failure or rejection, the SLPKMF 210 does not provide the group broadcast key K_{B} to all responding UEs 204, 206, and 208. The SLPKMF 210 may also provide a rejection indication or message to the UE 202 indicating that the requested SL ranging or positioning action is rejected or denied (e.g., and thus is not performed).

At 240, all UEs 202, 204, 206, and 208 participate in the requested SL ranging or positioning action according to the request at 226.

At 242, if a SLPP session-based operation is used, the UE 202 establishes an SLPP session with the participating UEs 204, 206, and 208. The SLPP session may use the broadcast key K_{B} for authentication and establishment. The session establishment at 242 may be skipped if a SLPP session-less operation is used.

At 244, the participating UEs 204, 206, and 208 provide their results from the SL ranging or positioning action performed at 240. For example, the UEs 204, 206 and 208 provide at least one of assistance data, configuration information, or location information to the UE 202 protected with the common group broadcast key K_{B}.
If SLPP session-less operation is used, each participating UE 204, 206, and 208 broadcasts the information.
If SLPP session-based operation is used, each participating UE 204, 206, and 208 sends the information within the established SLPP session.

At 246, if SLPP session-based operation is used, the UE 202 terminates the SLPP session with the participating UEs 204, 206, and 208 when the SL ranging or positioning action has been completed.

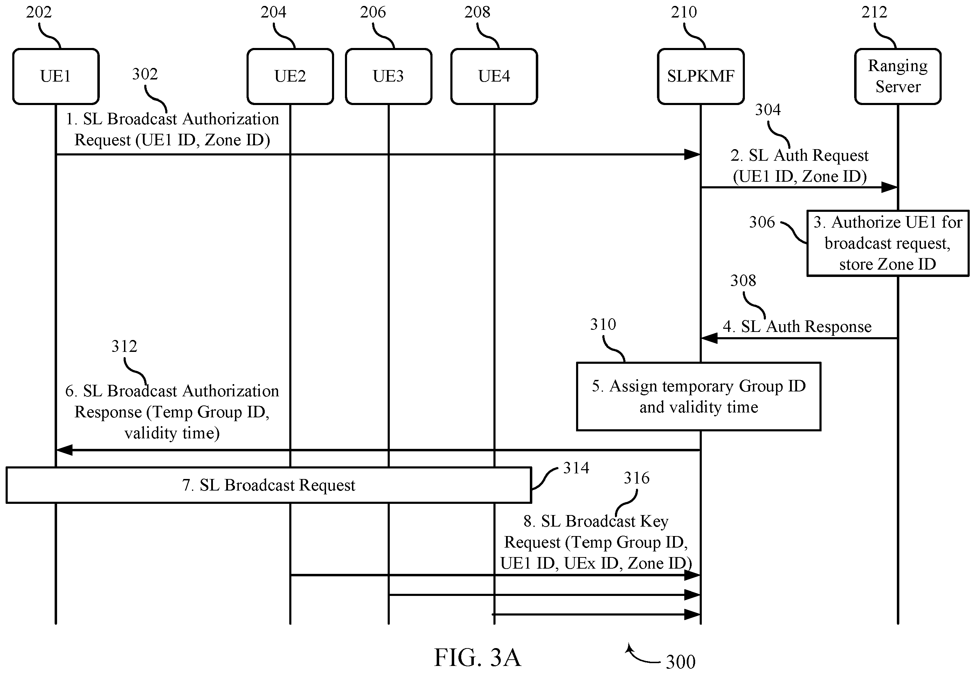

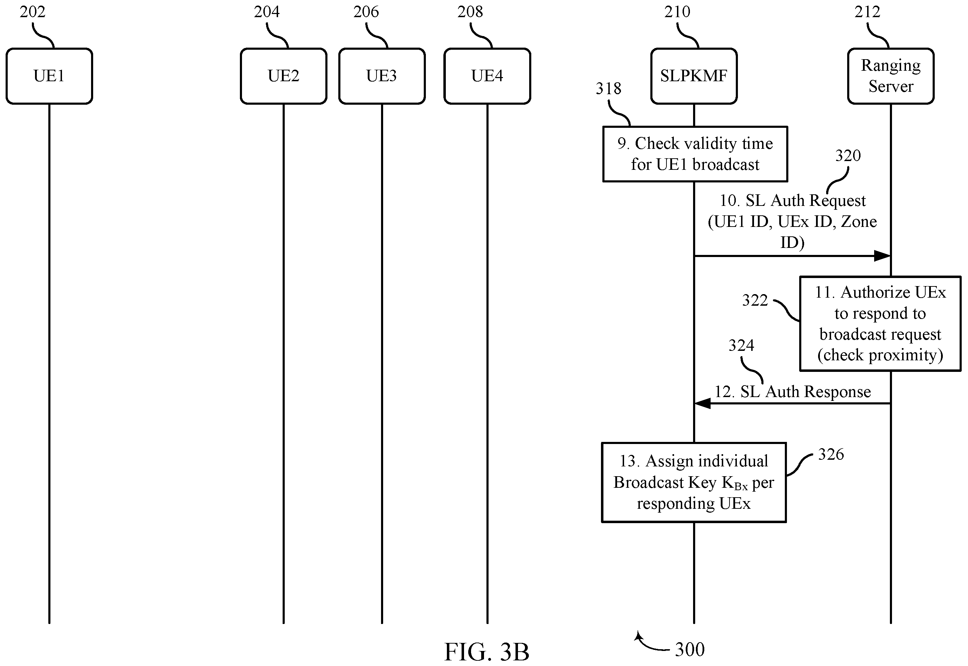

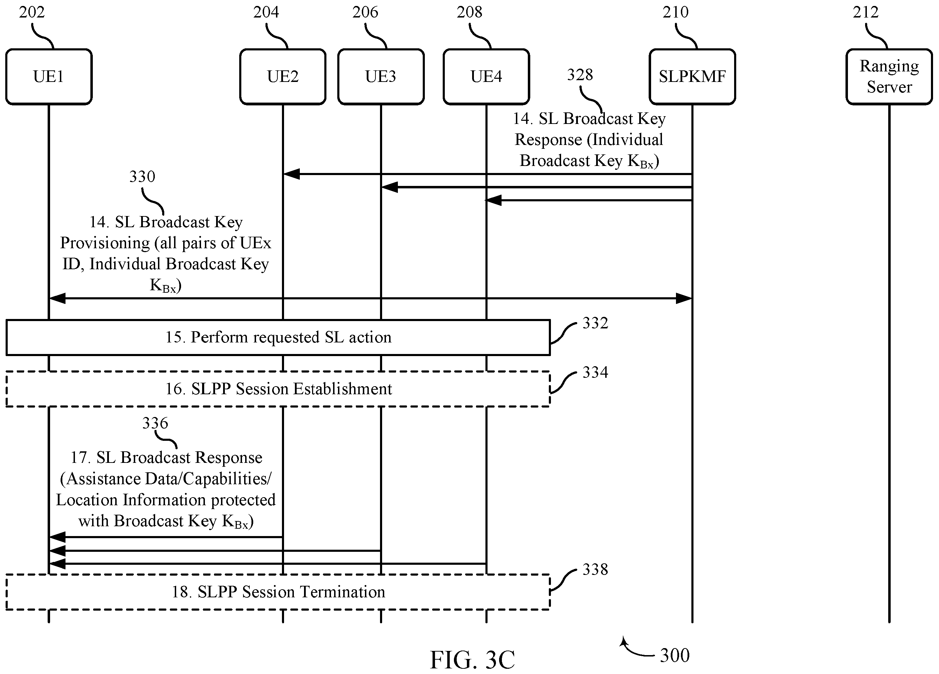

FIGs. 3A, 3B, and 3C illustrate an example 300 of ad-hoc group creation for broadcast SL positioning that supports protecting broadcast ranging and positioning messages over sidelink interface in accordance with aspects of the present disclosure. The example 200 includes a UE 202 (also referred to as an initiating or initiator UE), multiple additional UEs 204, 206, and 208 (each also referred to as a participating or secondary UE), an SLPKMF 210, and a ranging server 212. The SLPKMF 210 can be implemented on the same device as the ranging server 212 or on a separate device. In one or more implementations, the SLPKMF 210 is implemented in a UE. Although three participating UEs 204, 206, and 208 are illustrated, it should be noted that the techniques discussed herein may be used with any number of participating UEs.

The example 300 is similar to the example 200 of FIGs. 2A, 2B, and 2C, but differs in that the example 300 uses individual broadcast keys K_{Bx} for the UEs 204, 206, and 208 whereas the example 200 uses a common group broadcast key K_{B}.

At 302, the UE 202 wants to initiate an SL broadcast authorization request and sends a broadcast authorization request message to the SLPKMF 210 including the UE ID of the UE 202 and a zone ID where the UE 202 is located. The zone ID identifies a zone in which the UE 202 is located, where the zone is a particular physical location or an approximate physical area in which the UE 202 is located. The zone ID can be provided by the UE 202 provided the UE 202 has the capabilities to provide such information, e.g., the UE 202 has GNSS capability to compute its own absolute location with the Zone ID being computed based on the following set of equations: ${x}_{1} = Floor \left(x/L\right) Mod 64 ,$ ${y}_{1} = Floor \left(y/L\right) Mod 64 ,$ $Zone_id = {y}_{1} * 64 + {x}_{1} ,$ where L is the value of sl-ZoneLength included in an RRC message or IE, e.g., sl-ZoneConfig, x is the geodesic distance in longitude between the current location of the UE 202 and geographical coordinates (0, 0) according to a world geodetic system 84 (WGS84) model and is expressed, e.g., in meters, y is the geodesic distance in latitude between the current location of the UE 202 and geographical coordinates (0, 0) according to the WGS84 model and is expressed, e.g., in meters.

At 304, the SLPKMF 210 sends an authorization request (e.g., an authorization request message) of the UE 202 for broadcast requests to the ranging server 212. The authorization request includes the ID of UE 202 and the zone ID for the UE 202.

At 306, the ranging server 212 authorizes the request, e.g., based on the UE 202 subscription. The ranging server 212 also stores the Zone ID corresponding to the UE 202.

At 308, the ranging server provides the authorization result to the SLPKMF 210.

At 310, the SLPKMF 210 assigns a temporary group ID for the broadcast communication. The SLPKMF 210 also sets a validity time for the broadcast procedure, e.g., UEs responding to the broadcast request as discussed below have to respond within the validity time. Additionally, in one or more implementations the individual broadcast keys K_{Bx} in the participating UEs 204, 206, and 208, discussed in more detail below, are to be removed after expiration of the validity time. Accordingly, the SLPKMF 210 sets the validity time to allow the positioning or ranging action to complete. The validity time can be specified in various manners, such as a fixed time (e.g., the current time plus a particular number of milliseconds).

At 312, the SLPKMF 210 provides the temporary group ID and the validity time to the UE 202 in a broadcast authorization response message. The Individual broadcast keys K_{Bx} for will be assigned per participating UE 204, 206, and 208 as discussed in more detail below.

At 314, the UE 202 sends a SL broadcast message with a requested positioning or ranging action, the ID of UE 202, and the temporary group ID.

At 316, each of the UE 204, the UE 206, and the UE 208 receives the SL broadcast message from the UE 202 and sends a broadcast key request to the SLPKMF 210. The broadcast key request includes the temporary group ID, the ID of UE 202, the ID of the UE sending the broadcast key request (e.g., the ID of UE 204, UE 206, or UE 208), and a location identity (e.g., zone ID) of the UE sending the broadcast key request (e.g., the ID of UE 204, UE 206, or UE 208) indicating the local area where the UE sending the broadcast key request is located.

At 318, the SLPKMF 210 checks whether the UE will respond within the validity time of the broadcast request (e.g., whether the broadcast key request is received from the UE 204, UE 206, or UE 208 within the validity time or at least a threshold amount of time before the validity time). In one or more implementations, the SLPKMF 210 sends an authorization request to the ranging server 212 if the UE will respond within the validity time of the broadcast request. Additionally or alternatively, if the UE will not respond within the validity time of the broadcast request, the SLPKMF 210 need not send the authorization request to the ranging server 212 and may send a rejection indication or message to the UE 202 indicating that the requested SL ranging or positioning action is rejected or denied (e.g., and thus is not performed).

At 320, the SLPKMF 210 sends an authorization request to the ranging server 212. The SLPKMF 210 may send individual requests per UE or accumulate the requests of all UEs responding to the same temporary group ID and initiator ID (ID of UE 202). The authorization request includes the ID of UE 202, the ID of the responder UE (UE 204, UE 206, or UE 208), and the location ID (e.g., zone ID) of the responder UE (UE 204, UE 206, or UE 208).

At 322, the ranging server 212 authorizes the request of the participating UEs and may check whether all participating UEs are located in the same Zone or location, also referred to as a proximity check. For example, the ranging server 212 compares the location identity provided by the UE 202 at 216 with the location identities from the UEs 204, 206, and 208. If the location identities (e.g., zones) of the UE 202 and at least one responding UE 204, 206, or 208 are different, the ranging server 212 may reject the authorization. If the location identities (e.g., zones) of the UE 202 and the responding UEs 204, 206, and 208 are the same (or within a threshold amount of being the same), the ranging server 212 may accept or approve the authorization.

At 324, the ranging server 212 provides the authorization result to the SLPKMF 210. Depending on the request at 232, the ranging server 212 may send individual responses per UE 204, 206, and 208, or an accumulated response for all responding UEs 204, 206, and 208.

At 326, the SLPKMF 210 generates an individual broadcast key K_{Bx} for each responding UEx. E.g., the SLPKMF 210 generates an individual broadcast key K_{B2} for UE2 (UE 204), generates an individual broadcast key K_{B3} for UE3 (UE 206), and generates an individual broadcast key K_{B4} for UE4 (UE 208).

At 328, the SLPKMF 210 provides the individual broadcast key K_{Bx} generated at 326 for the UEx to each responding UEx. E.g., the SLPKMF 210 provides the individual broadcast key K_{B2} to UE2 (UE 204), provides the individual broadcast key K_{B3} to UE3 (UE 206), and provides the individual broadcast key K_{B4} to UE4 (UE 208).

At 330, the SLPKMF 210 provides all pairs of the individual broadcast key K_{Bx} and responding UEx IDs to the UE 202. Accordingly, the UE 202 receives a pairing of each UE 204, 206, and 208 with its respective individual broadcast key.

At 332, all UEs 202, 204, 206, and 208 participate in the requested SL ranging or positioning action according to the request at 226.

At 334, if a SLPP session-based operation is used, the UE 202 establishes an SLPP session with the participating UEs 204, 206, and 208. The SLPP session may use the broadcast keys K_{Bx} for authentication and establishment. The session establishment at 242 may be skipped if a SLPP session-less operation is used.

At 336, the participating UEs 204, 206, and 208 provide their results from the SL ranging or positioning action performed at 332. For example, the UEs 204, 206 and 208 provide at least one of assistance data, configuration information, or location information to the UE 202 protected with the individual broadcast keys K_{Bx}.

If SLPP session-less operation is used, each participating UE 204, 206, and 208 broadcasts the information.

If SLPP session-based operation is used, each participating UE 204, 206, and 208 sends the information within the established SLPP session.

At 338, if SLPP session-based operation is used, the UE 202 terminates the SLPP session with the participating UEs 204, 206, and 208 when the SL ranging or positioning action has been completed.

Accordingly, a UE can initiate the ranging or positioning with UEs in proximity with broadcast messages. The UEs responding to the broadcast request from an initiator UE will form an ad-hoc temporary group only for the requested action, which will be protected with one key per group or individual keys per participating UE. Accordingly, SL positioning assistance data and location information is protected during the communication.

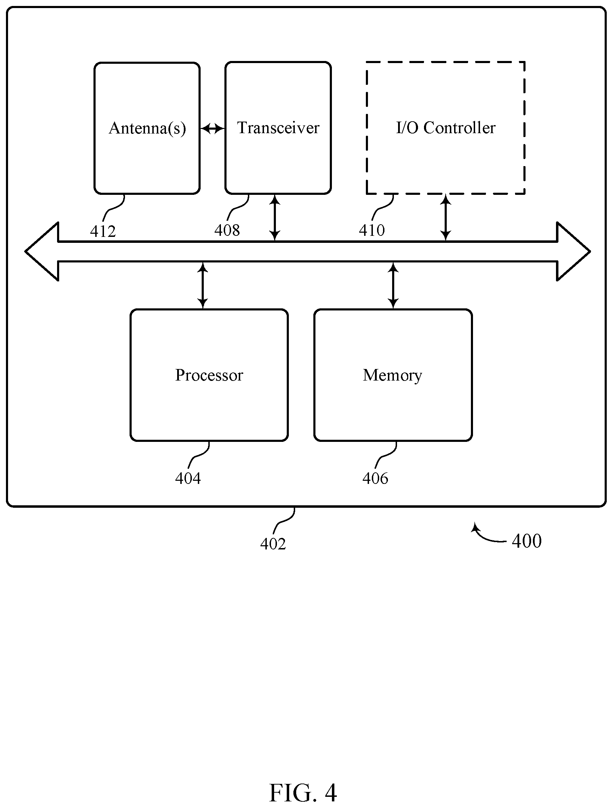

FIG. 4 illustrates an example of a block diagram 400 of a device 402 that supports protecting broadcast ranging and positioning messages over sidelink interface in accordance with aspects of the present disclosure. The device 402 may be an example of a network entity 102, or a UE 104, as described herein. The device 402 may support wireless communication with one or more network entities 102, UEs 104, or any combination thereof. The device 402 may include components for bi-directional communications including components for transmitting and receiving communications, such as a processor 404, a memory 406, a transceiver 408, and an I/O controller 410. These components may be in electronic communication or otherwise coupled (e.g., operatively, communicatively, functionally, electronically, electrically) via one or more interfaces (e.g., buses).

The processor 404, the memory 406, the transceiver 408, or various combinations thereof or various components thereof may be examples of means for performing various aspects of the present disclosure as described herein. For example, the processor 404, the memory 406, the transceiver 408, or various combinations or components thereof may support a method for performing one or more of the operations described herein.

In some implementations, the processor 404, the memory 406, the transceiver 408, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 404 and the memory 406 coupled with the processor 404 may be configured to perform one or more of the functions described herein (e.g., executing, by the processor 404, instructions stored in the memory 406).

For example, the processor 404 may support wireless communication at the device 402 in accordance with examples as disclosed herein. Processor 404 may be configured as or otherwise support to: receive, from a first device, a first signaling indicating a broadcast authorization request message that includes an identity of the first device and a location identity for the first device; transmit, to the first device, a second signaling indicating a broadcast authorization response message that includes a temporary group identifier and a validity time; receive, from a second device, a third signaling indicating a sidelink broadcast key request that includes the temporary group identifier, the identity of the first device, an identity of the second device, and a location identity for the second device; transmit, to the second device, a fourth signaling indicating a sidelink broadcast key response message that includes a broadcast key.

Additionally or alternatively, the processor 404 may be configured to or otherwise support: to: transmit, to a third device, a fifth signaling indicating an authorization request message that includes the identity of the first device and the location identity; receive, from the third device, a sixth signaling indicating a successful authorization result of the first device; and transmit, in response to the sixth signaling, the second signaling to the first device; to: assign the temporary group identifier to the first device; to: generate a group broadcast key for a broadcast associated with the broadcast authorization request message, where the broadcast authorization response message further includes the group broadcast key; and generate the validity time; Additionally or alternatively, the processor 404 may be configured to or otherwise support: to: verify whether the sidelink broadcast key request message is received from the second device within the validity time; and transmit, in response to the sidelink broadcast key request message being received from the second device within the validity time, the fourth signaling to the second device; to: transmit, to a third device, a fifth signaling indicating a sidelink authorization request that includes the identity of the first device, the identity of the second device, and the location identity; receive, from the third device, a sixth signaling indicating an authorization result based on whether the first device and the second device are have a same location identity; and transmit, in response to the sidelink broadcast key request message being received from the second device within the validity time and the first device and the second device having the same location identity, the fourth signaling to the second device; where the broadcast key comprises a group broadcast key, the second signaling includes the group broadcast key, and the processor is further configured to cause the apparatus to: transmit, to one or more additional UEs, one or more additional signalings indicating the group broadcast key; where the broadcast key comprises a first individual broadcast key for the second device, and the processor is further configured to cause the apparatus to: transmit, to a third device, fifth signaling indicating a second individual broadcast key for the third device; where the processor is further configured to cause the apparatus to: transmit, to the first device, a sixth signaling indicating a pairing of the first individual broadcast key with the second device and a pairing of the second individual broadcast key with the third device; where the apparatus implements a sidelink positioning key management function, the first device comprises a first user equipment, and the second device comprises a second user equipment.

For example, the processor 404 may support wireless communication at the device 402 in accordance with examples as disclosed herein. Processor 404 may be configured as or otherwise support to: receive, from a first device, a first signaling indicating an authorization request message that includes an identity of a second device and a location identity for the second device; transmit, to the first device, a second signaling indicating a successful authorization result for the first device; receive, from the first device, a third signaling indicating a sidelink authorization request that includes the identity of the second device, the identity of a third device, and a location identity for the third device; transmit, to the first device, a fourth signaling indicating an authorization result for the sidelink authorization request.

Additionally or alternatively, the processor 404 may be configured to or otherwise support: to: store the location identity for the second device; to: check, based on the location identity for the second device and the location identity for the third device, whether the second device and the third device have a same location identity; and transmit, in response to the second device and the third device having the same location identity, the fourth signaling to the first device; where the apparatus comprises a ranging server, the first device implements a sidelink positioning key management function, the second device comprises a first user equipment, and the third device comprises a second user equipment.

For example, the processor 404 may support wireless communication at the device 402 in accordance with examples as disclosed herein. Processor 404 may be configured as or otherwise support a means for receiving, from a first device, a first signaling indicating a broadcast authorization request message that includes an identity of the first device and a location identity for the first device; transmitting, to the first device, a second signaling indicating a broadcast authorization response message that includes a temporary group identifier and a validity time; receiving, from a second device, a third signaling indicating a sidelink broadcast key request that includes the temporary group identifier, the identity of the first device, an identity of the second device, and a location identity for the second device; and transmitting, to the second device, a fourth signaling indicating a sidelink broadcast key response message that includes a broadcast key.

Additionally or alternatively, the processor 404 may be configured to or otherwise support: transmitting, to a third device, a fifth signaling indicating an authorization request message that includes the identity of the first device and the location identity; receiving, from the third device, a sixth signaling indicating a successful authorization result of the first device; and transmitting, in response to the sixth signaling, the second signaling to the first device; assigning the temporary group identifier to the first device; generating a group broadcast key for a broadcast associated with the broadcast authorization request message, where the broadcast authorization response message further includes the group broadcast key; and generating the validity time; verifying whether the sidelink broadcast key request message is received from the second device within the validity time; and transmitting, in response to the sidelink broadcast key request message being received from the second device within the validity time, the fourth signaling to the second device; transmitting, to a third device, a fifth signaling indicating a sidelink authorization request that includes the identity of the first device, the identity of the second device, and the location identity; receiving, from the third device, a sixth signaling indicating an authorization result based on whether the first device and the second device are have a same location identity; and transmitting, in response to the sidelink broadcast key request message being received from the second device within the validity time and the first device and the second device having the same location identity, the fourth signaling to the second device; where the broadcast key comprises a group broadcast key, the second signaling includes the group broadcast key, and the method further comprises: transmitting, to one or more additional UEs, one or more additional signalings indicating the group broadcast key; where the broadcast key comprises a first individual broadcast key for the second device, and the method further comprises: transmitting, to a third device, fifth signaling indicating a second individual broadcast key for the third device; transmitting, to the first device, a sixth signaling indicating a pairing of the first individual broadcast key with the second device and a pairing of the second individual broadcast key with the third device; where the method is implemented by a sidelink positioning key management function, the first device comprises a first user equipment, and the second device comprises a second user equipment.

For example, the processor 404 may support wireless communication at the device 402 in accordance with examples as disclosed herein. Processor 404 may be configured as or otherwise support a means for receiving, from a first device, a first signaling indicating an authorization request message that includes an identity of a second device and a location identity for the second device; transmitting, to the first device, a second signaling indicating a successful authorization result for the first device; receiving, from the first device, a third signaling indicating a sidelink authorization request that includes the identity of the second device, the identity of a third device, and a location identity for the third device; and transmitting, to the first device, a fourth signaling indicating an authorization result for the sidelink authorization request.

Additionally or alternatively, the processor 404 may be configured to or otherwise support: storing the location identity for the second device; checking, based on the location identity for the second device and the location identity for the third device, whether the second device and the third device have a same location identity; and transmitting, in response to the second device and the third device having the same location identity, the fourth signaling to the first device; where the method is implemented in a ranging server, the first device implements a sidelink positioning key management function, the second device comprises a first user equipment, and the third device comprises a second user equipment.

The processor 404 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 404 may be configured to operate a memory array using a memory controller. In some other implementations, a memory controller may be integrated into the processor 404. The processor 404 may be configured to execute computer-readable instructions stored in a memory (e.g., the memory 406) to cause the device 402 to perform various functions of the present disclosure.

The memory 406 may include random access memory (RAM) and read-only memory (ROM). The memory 406 may store computer-readable, computer-executable code including instructions that, when executed by the processor 404 cause the device 402 to perform various functions described herein. The code may be stored in a non-transitory computer-readable medium such as system memory or another type of memory. In some implementations, the code may not be directly executable by the processor 404 but may cause a computer (e.g., when compiled and executed) to perform functions described herein. In some implementations, the memory 406 may include, among other things, a basic I/O system (BIOS) which may control basic hardware or software operation such as the interaction with peripheral components or devices.

The I/O controller 410 may manage input and output signals for the device 402. The I/O controller 410 may also manage peripherals not integrated into the device 402. In some implementations, the I/O controller 410 may represent a physical connection or port to an external peripheral. In some implementations, the I/O controller 410 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 410 may be implemented as part of a processor, such as the processor 404. In some implementations, a user may interact with the device 402 via the I/O controller 410 or via hardware components controlled by the I/O controller 410.

In some implementations, the device 402 may include a single antenna 412. However, in some other implementations, the device 402 may have more than one antenna 412 (i.e., multiple antennas), including multiple antenna panels or antenna arrays, which may be capable of concurrently transmitting or receiving multiple wireless transmissions. The transceiver 408 may communicate bi-directionally, via the one or more antennas 412, wired, or wireless links as described herein. For example, the transceiver 408 may represent a wireless transceiver and may communicate bi-directionally with another wireless transceiver. The transceiver 408 may also include a modem to modulate the packets, to provide the modulated packets to one or more antennas 412 for transmission, and to demodulate packets received from the one or more antennas 412.

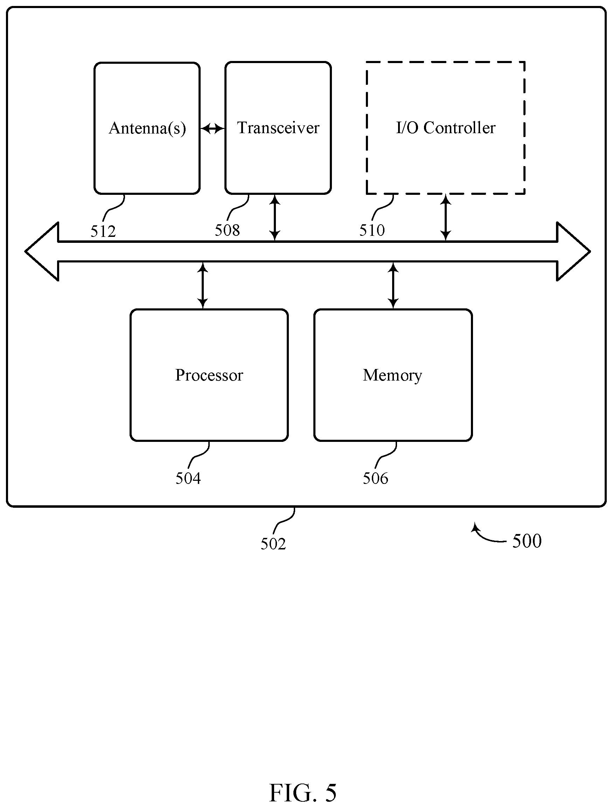

FIG. 5 illustrates an example of a block diagram 500 of a device 502 that supports protecting broadcast ranging and positioning messages over sidelink interface in accordance with aspects of the present disclosure. The device 502 may be an example of a UE 104 as described herein. The device 502 may support wireless communication with one or more network entities 102, UEs 104, or any combination thereof. The device 502 may include components for bi-directional communications including components for transmitting and receiving communications, such as a processor 504, a memory 506, a transceiver 508, and an I/O controller 510. These components may be in electronic communication or otherwise coupled (e.g., operatively, communicatively, functionally, electronically, electrically) via one or more interfaces (e.g., buses).

The processor 504, the memory 506, the transceiver 508, or various combinations thereof or various components thereof may be examples of means for performing various aspects of the present disclosure as described herein. For example, the processor 504, the memory 506, the transceiver 508, or various combinations or components thereof may support a method for performing one or more of the operations described herein.

In some implementations, the processor 504, the memory 506, the transceiver 508, or various combinations or components thereof may be implemented in hardware (e.g., in communications management circuitry). The hardware may include a processor, a digital signal processor (DSP), an ASIC, a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 504 and the memory 506 coupled with the processor 504 may be configured to perform one or more of the functions described herein (e.g., executing, by the processor 504, instructions stored in the memory 506).

For example, the processor 504 may support wireless communication at the device 502 in accordance with examples as disclosed herein. Processor 504 may be configured as or otherwise support to: receive, from a first device, a first signaling indicating a sidelink broadcast message with a requested positioning or ranging action that includes an identity of the first device and a temporary group identifier; transmit, to a second device, a second signaling indicating a sidelink broadcast key request that includes the temporary group identifier, the identity of the first device, an identity of the apparatus, and a location identity for the apparatus; receive, from the second device, a third signaling indicating a sidelink broadcast key response message.

Additionally or alternatively, the processor 504 may be configured to or otherwise support: where the sidelink broadcast key response message includes a broadcast key in response to the sidelink broadcast key request message being transmitted to the second device within a validity time as well as the apparatus and the first device having a same location identity; where the sidelink broadcast key response message includes a group broadcast key that is also received by one or more additional apparatuses; where the sidelink broadcast key response message includes an individual broadcast key for the apparatus; where the apparatus comprises a first user equipment, the first device comprises a second user equipment, and the second device comprises a device that implements a sidelink positioning key management function.

For example, the processor 504 may support wireless communication at the device 502 in accordance with examples as disclosed herein. Processor 504 may be configured as or otherwise support to: transmit, to a first device, a first signaling indicating a broadcast authorization request message that includes an identity of the apparatus and a location identity for the apparatus; receive, from the first device, a second signaling indicating a broadcast authorization response message that includes a temporary group identifier and a validity time; transmit, to a second device, a third signaling indicating a sidelink broadcast message with a requested positioning or ranging action that includes an identity of the apparatus and the temporary group identifier; receive, from the first device, a fourth signaling indicating a broadcast key; establish, with the second device and using the broadcast key, a protocol for SLPP session; receive, from the second device, a fifth signaling indicating a result of the requested positioning or ranging action that is protected with the broadcast key.

Additionally or alternatively, the processor 504 may be configured to or otherwise support: where the second signaling and the fourth signaling are a same signaling, and the broadcast key comprises a group broadcast key that is also received by one or more additional devices; where the broadcast key comprises an individual broadcast key for the apparatus; where the apparatus comprises a first user equipment, the first device comprises a device that implements a sidelink positioning key management function, and the second device comprises a second UE.

For example, the processor 504 may support wireless communication at the device 502 in accordance with examples as disclosed herein. Processor 504 may be configured as or otherwise support a means for receiving, from a first device, a first signaling indicating a sidelink broadcast message with a requested positioning or ranging action that includes an identity of the first device and a temporary group identifier; transmitting, to a second device, a second signaling indicating a sidelink broadcast key request that includes the temporary group identifier, the identity of the first device, an identity of an apparatus implementing the method, and a location identity for the apparatus; and receiving, from the second device, a third signaling indicating a sidelink broadcast key response message.

Additionally or alternatively, the processor 504 may be configured to or otherwise support: where the sidelink broadcast key response message includes a broadcast key in response to the sidelink broadcast key request message being transmitted to the second device within a validity time as well as a device implementing the method and the first device having a same location identity; where the sidelink broadcast key response message includes a group broadcast key that is also received by one or more additional apparatuses; where the sidelink broadcast key response message includes an individual broadcast key for a device implementing the method; where the method is implemented by a first user equipment, the first device comprises a second user equipment, and the second device comprises a device that implements a sidelink positioning key management function.

For example, the processor 504 may support wireless communication at the device 502 in accordance with examples as disclosed herein. Processor 504 may be configured as or otherwise support a means for transmitting, to a first device, a first signaling indicating a broadcast authorization request message that includes an identity of an apparatus implementing the method and a location identity for the apparatus; receiving, from the first device, a second signaling indicating a broadcast authorization response message that includes a temporary group identifier and a validity time; transmitting, to a second device, a third signaling indicating a sidelink broadcast message with a requested positioning or ranging action that includes an identity of the apparatus and the temporary group identifier; receiving, from the first device, a fourth signaling indicating a broadcast key; establishing, with the second device and using the broadcast key, a protocol for SLPP session; and receiving, from the second device, a fifth signaling indicating a result of the requested positioning or ranging action that is protected with the broadcast key.

Additionally or alternatively, the processor 504 may be configured to or otherwise support: where the second signaling and the fourth signaling are a same signaling, and the broadcast key comprises a group broadcast key that is also received by one or more additional devices; where the broadcast key comprises an individual broadcast key for a device implementing the method; where the method is implemented by a first user equipment, the first device comprises a device that implements a sidelink positioning key management function, and the second device comprises a second UE.

The processor 504 of the device 502, such as a UE 104, may support wireless communication in accordance with examples as disclosed herein. The processor 504 includes at least one controller coupled with at least one memory, and is configured to or operable to cause the processor to transmit, to a first device, a first signaling indicating a broadcast authorization request message that includes an identity of the apparatus and a location identity for the apparatus; receive, from the first device, a second signaling indicating a broadcast authorization response message that includes an temporary group identifier and a validity time; transmit, to a second device, a third signaling indicating a sidelink broadcast message with a requested positioning or ranging action that includes an identity of the apparatus and the temporary group identifier; receive, from the first device, a fourth signaling indicating a broadcast key; establish, with the second device and using the broadcast key, a protocol for sidelink positioning procedures (SLPP) session; and receive, from the second device, a fifth signaling indicating a result of the requested positioning or ranging action that is protected with the broadcast key.

The processor 504 of the device 502, such as a UE 104, may support wireless communication in accordance with examples as disclosed herein. The processor 504 includes at least one controller coupled with at least one memory, and is configured to or operable to cause the processor to receive, from a first device, a first signaling indicating a sidelink broadcast message with a requested positioning or ranging action that includes an identity of the first device and an temporary group identifier; transmit, to a second device, a second signaling indicating a sidelink broadcast key request that includes the temporary group identifier, the identity of the first device, an identity of the apparatus, and a location identity for the apparatus; receive, from the second device, a third signaling indicating a sidelink broadcast key response message.

The processor 504 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 504 may be configured to operate a memory array using a memory controller. In some other implementations, a memory controller may be integrated into the processor 504. The processor 504 may be configured to execute computer-readable instructions stored in a memory (e.g., the memory 506) to cause the device 502 to perform various functions of the present disclosure.

The memory 506 may include random access memory (RAM) and read-only memory (ROM). The memory 506 may store computer-readable, computer-executable code including instructions that, when executed by the processor 504 cause the device 502 to perform various functions described herein. The code may be stored in a non-transitory computer-readable medium such as system memory or another type of memory. In some implementations, the code may not be directly executable by the processor 504 but may cause a computer (e.g., when compiled and executed) to perform functions described herein. In some implementations, the memory 506 may include, among other things, a basic I/O system (BIOS) which may control basic hardware or software operation such as the interaction with peripheral components or devices.

The I/O controller 510 may manage input and output signals for the device 502. The I/O controller 510 may also manage peripherals not integrated into the device 502. In some implementations, the I/O controller 510 may represent a physical connection or port to an external peripheral. In some implementations, the I/O controller 510 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 510 may be implemented as part of a processor, such as the processor 504. In some implementations, a user may interact with the device 502 via the I/O controller 510 or via hardware components controlled by the I/O controller 510.

In some implementations, the device 502 may include a single antenna 512. However, in some other implementations, the device 502 may have more than one antenna 512 (i.e., multiple antennas), including multiple antenna panels or antenna arrays, which may be capable of concurrently transmitting or receiving multiple wireless transmissions. The transceiver 508 may communicate bi-directionally, via the one or more antennas 512, wired, or wireless links as described herein. For example, the transceiver 508 may represent a wireless transceiver and may communicate bi-directionally with another wireless transceiver. The transceiver 508 may also include a modem to modulate the packets, to provide the modulated packets to one or more antennas 512 for transmission, and to demodulate packets received from the one or more antennas 512.

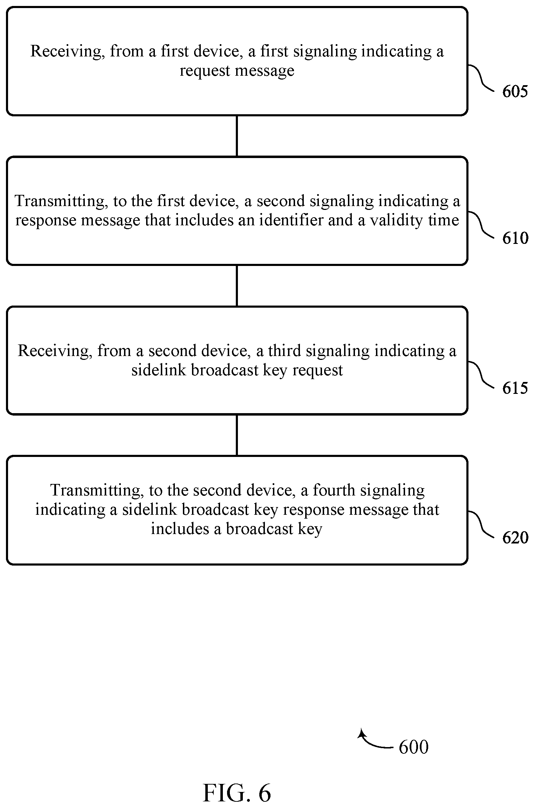

FIG. 6 illustrates a flowchart of a method 600 that supports protecting broadcast ranging and positioning messages over sidelink interface in accordance with aspects of the present disclosure. The operations of the method 600 may be implemented by a device or its components as described herein. For example, the operations of the method 600 may be performed by a network entity 102, or a UE 104, as described with reference to FIGs. 1 through 5. In some implementations, the device may execute a set of instructions to control the function elements of the device to perform the described functions. Additionally, or alternatively, the device may perform aspects of the described functions using special-purpose hardware.

At 605, the method may include receiving, from a first device, a first signaling indicating a request message. The operations of 605 may be performed in accordance with examples as described herein. In some implementations, aspects of the operations of 605 may be performed by a device as described with reference to FIG. 1.

At 610, the method may include transmitting, to the first device, a second signaling indicating a response message that includes an identifier and a validity time. The operations of 610 may be performed in accordance with examples as described herein. In some implementations, aspects of the operations of 610 may be performed by a device as described with reference to FIG. 1.

At 615, the method may include receiving, from a second device, a third signaling indicating a sidelink broadcast key request. The operations of 615 may be performed in accordance with examples as described herein. In some implementations, aspects of the operations of 615 may be performed by a device as described with reference to FIG. 1.

At 620, the method may include transmitting, to the second device, a fourth signaling indicating a sidelink broadcast key response message that includes a broadcast key. The operations of 620 may be performed in accordance with examples as described herein. In some implementations, aspects of the operations of 620 may be performed by a device as described with reference to FIG. 1.

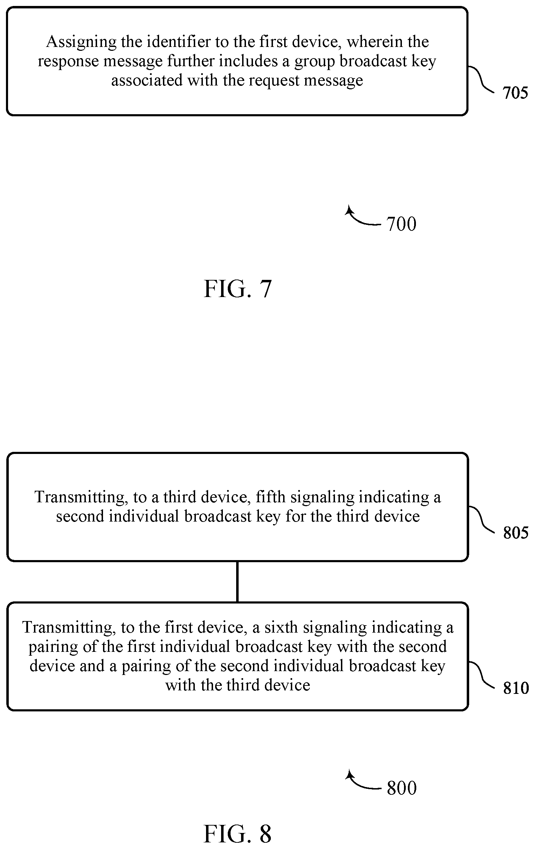

FIG. 7 illustrates a flowchart of a method 700 that supports protecting broadcast ranging and positioning messages over sidelink interface in accordance with aspects of the present disclosure. The operations of the method 700 may be implemented by a device or its components as described herein. For example, the operations of the method 700 may be performed by a network entity 102, or a UE 104, as described with reference to FIGs. 1 through 5. In some implementations, the device may execute a set of instructions to control the function elements of the device to perform the described functions. Additionally, or alternatively, the device may perform aspects of the described functions using special-purpose hardware.

At 705, the method may include assigning the identifier to the first device wherein the response message further includes a group broadcast key associated with the request message. The operations of 705 may be performed in accordance with examples as described herein. In some implementations, aspects of the operations of 705 may be performed by a device as described with reference to FIG. 1.

FIG. 8 illustrates a flowchart of a method 800 that supports protecting broadcast ranging and positioning messages over sidelink interface in accordance with aspects of the present disclosure. The operations of the method 800 may be implemented by a device or its components as described herein. For example, the operations of the method 800 may be performed by a network entity 102, or a UE 104, as described with reference to FIGs. 1 through 5. In some implementations, the device may execute a set of instructions to control the function elements of the device to perform the described functions. Additionally, or alternatively, the device may perform aspects of the described functions using special-purpose hardware.

At 805, the method may include transmitting, to a third device, fifth signaling indicating a second individual broadcast key for the third device. The operations of 805 may be performed in accordance with examples as described herein. In some implementations, aspects of the operations of 805 may be performed by a device as described with reference to FIG. 1.

At 810, the method may include transmitting, to the first device, a sixth signaling indicating a pairing of the first individual broadcast key with the second device and a pairing of the second individual broadcast key with the third device. The operations of 810 may be performed in accordance with examples as described herein. In some implementations, aspects of the operations of 810 may be performed by a device as described with reference to FIG. 1.

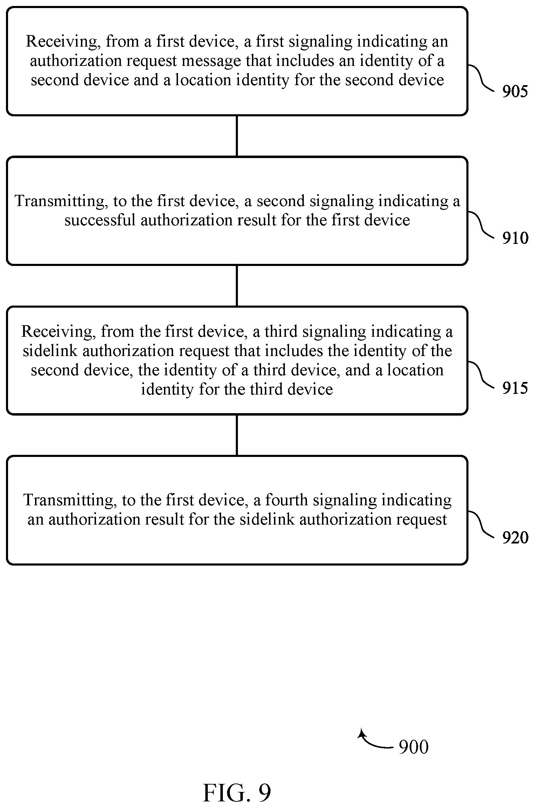

FIG. 9 illustrates a flowchart of a method 900 that supports protecting broadcast ranging and positioning messages over sidelink interface in accordance with aspects of the present disclosure. The operations of the method 900 may be implemented by a device or its components as described herein. For example, the operations of the method 900 may be performed by a network entity 102, or a UE 104, as described with reference to FIGs. 1 through 5. In some implementations, the device may execute a set of instructions to control the function elements of the device to perform the described functions. Additionally, or alternatively, the device may perform aspects of the described functions using special-purpose hardware.

At 905, the method may include receiving, from a first device, a first signaling indicating an authorization request message that includes an identity of a second device and a location identity for the second device. The operations of 905 may be performed in accordance with examples as described herein. In some implementations, aspects of the operations of 905 may be performed by a device as described with reference to FIG. 1.

At 910, the method may include transmitting, to the first device, a second signaling indicating a successful authorization result for the first device. The operations of 910 may be performed in accordance with examples as described herein. In some implementations, aspects of the operations of 910 may be performed by a device as described with reference to FIG. 1.

At 915, the method may include receiving, from the first device, a third signaling indicating a sidelink authorization request that includes the identity of the second device, the identity of a third device, and a location identity for the third device. The operations of 915 may be performed in accordance with examples as described herein. In some implementations, aspects of the operations of 915 may be performed by a device as described with reference to FIG. 1.

At 920, the method may include transmitting, to the first device, a fourth signaling indicating an authorization result for the sidelink authorization request. The operations of 920 may be performed in accordance with examples as described herein. In some implementations, aspects of the operations of 920 may be performed by a device as described with reference to FIG. 1.

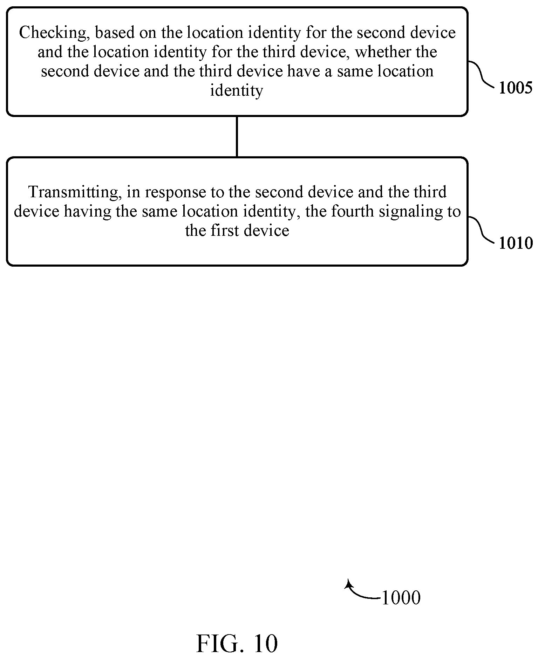

FIG. 10 illustrates a flowchart of a method 1000 that supports protecting broadcast ranging and positioning messages over sidelink interface in accordance with aspects of the present disclosure. The operations of the method 1000 may be implemented by a device or its components as described herein. For example, the operations of the method 1000 may be performed by a network entity 102, or a UE 104, as described with reference to FIGs. 1 through 5. In some implementations, the device may execute a set of instructions to control the function elements of the device to perform the described functions. Additionally, or alternatively, the device may perform aspects of the described functions using special-purpose hardware.

At 1005, the method may include checking, based on the location identity for the second device and the location identity for the third device, whether the second device and the third device have a same location identity. The operations of 1005 may be performed in accordance with examples as described herein. In some implementations, aspects of the operations of 1005 may be performed by a device as described with reference to FIG. 1.

At 1010, the method may include transmitting, in response to the second device and the third device having the same location identity, the fourth signaling to the first device. The operations of 1010 may be performed in accordance with examples as described herein. In some implementations, aspects of the operations of 1010 may be performed by a device as described with reference to FIG. 1.

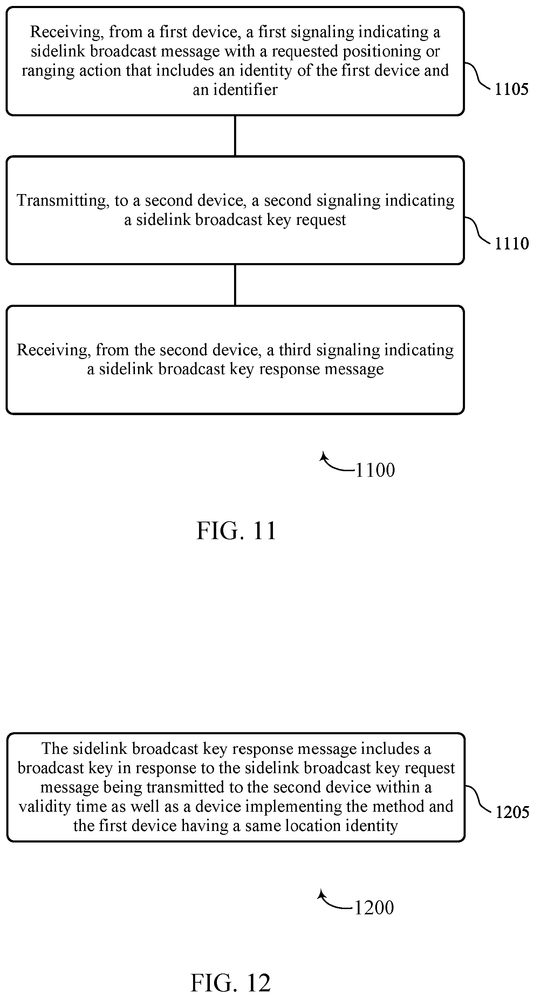

FIG. 11 illustrates a flowchart of a method 1100 that supports protecting broadcast ranging and positioning messages over sidelink interface in accordance with aspects of the present disclosure. The operations of the method 1100 may be implemented by a device or its components as described herein. For example, the operations of the method 1100 may be performed by a UE 104 as described with reference to FIGs. 1 through 5. In some implementations, the device may execute a set of instructions to control the function elements of the device to perform the described functions. Additionally, or alternatively, the device may perform aspects of the described functions using special-purpose hardware.

At 1105, the method may include receiving, from a first device, a first signaling indicating a sidelink broadcast message with a requested positioning or ranging action that includes an identity of the first device and an identifier. The operations of 1105 may be performed in accordance with examples as described herein. In some implementations, aspects of the operations of 1105 may be performed by a device as described with reference to FIG. 1.

At 1110, the method may include transmitting, to a second device, a second signaling indicating a sidelink broadcast key request. The operations of 1110 may be performed in accordance with examples as described herein. In some implementations, aspects of the operations of 1110 may be performed by a device as described with reference to FIG. 1.

At 1115, the method may include receiving, from the second device, a third signaling indicating a sidelink broadcast key response message. The operations of 1115 may be performed in accordance with examples as described herein. In some implementations, aspects of the operations of 1115 may be performed by a device as described with reference to FIG. 1.

FIG. 12 illustrates a flowchart of a method 1200 that supports protecting broadcast ranging and positioning messages over sidelink interface in accordance with aspects of the present disclosure. The operations of the method 1200 may be implemented by a device or its components as described herein. For example, the operations of the method 1200 may be performed by a UE 104 as described with reference to FIGs. 1 through 5. In some implementations, the device may execute a set of instructions to control the function elements of the device to perform the described functions. Additionally, or alternatively, the device may perform aspects of the described functions using special-purpose hardware.

At 1205, the method may include the sidelink broadcast key response message includes a broadcast key in response to the sidelink broadcast key request message being transmitted to the second device within a validity time as well as a device implementing the method and the first device having a same location identity. The operations of 1205 may be performed in accordance with examples as described herein. In some implementations, aspects of the operations of 1205 may be performed by a device as described with reference to FIG. 1.

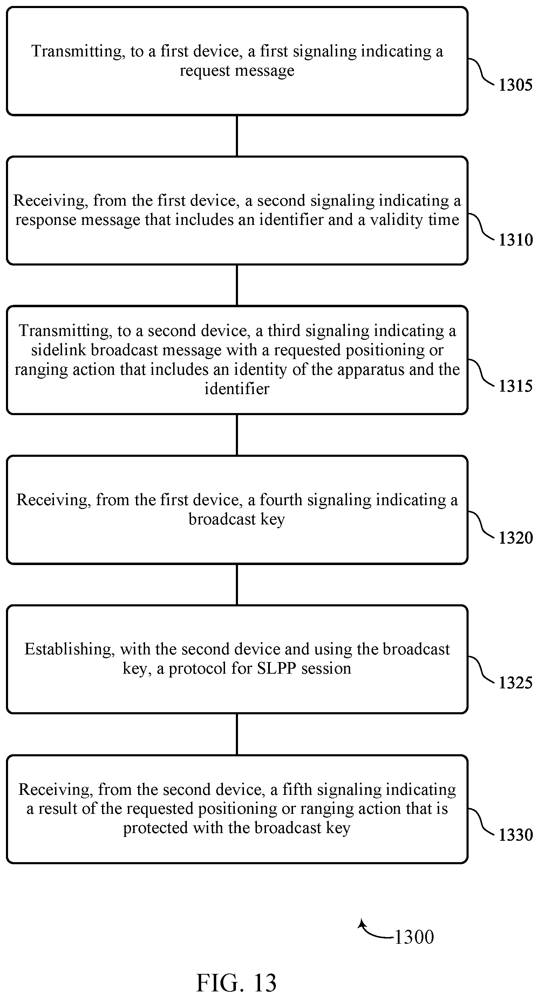

FIG. 13 illustrates a flowchart of a method 1300 that supports protecting broadcast ranging and positioning messages over sidelink interface in accordance with aspects of the present disclosure. The operations of the method 1300 may be implemented by a device or its components as described herein. For example, the operations of the method 1300 may be performed by a UE 104 as described with reference to FIGs. 1 through 5. In some implementations, the device may execute a set of instructions to control the function elements of the device to perform the described functions. Additionally, or alternatively, the device may perform aspects of the described functions using special-purpose hardware.

At 1305, the method may include transmitting, to a first device, a first signaling indicating a request message. The operations of 1305 may be performed in accordance with examples as described herein. In some implementations, aspects of the operations of 1305 may be performed by a device as described with reference to FIG. 1.

At 1310, the method may include receiving, from the first device, a second signaling indicating a response message that includes an identifier and a validity time. The operations of 1310 may be performed in accordance with examples as described herein. In some implementations, aspects of the operations of 1310 may be performed by a device as described with reference to FIG. 1.

At 1315, the method may include transmitting, to a second device, a third signaling indicating a sidelink broadcast message with a requested positioning or ranging action that includes an identity of the apparatus and the identifier. The operations of 1315 may be performed in accordance with examples as described herein. In some implementations, aspects of the operations of 1315 may be performed by a device as described with reference to FIG. 1.

At 1320, the method may include receiving, from the first device, a fourth signaling indicating a broadcast key. The operations of 1320 may be performed in accordance with examples as described herein. In some implementations, aspects of the operations of 1320 may be performed by a device as described with reference to FIG. 1.

At 1325, the method may include establishing, with the second device and using the broadcast key, a protocol for SLPP session. The operations of 1325 may be performed in accordance with examples as described herein. In some implementations, aspects of the operations of 1325 may be performed by a device as described with reference to FIG. 1.

At 1330, the method may include receiving, from the second device, a fifth signaling indicating a result of the requested positioning or ranging action that is protected with the broadcast key. The operations of 1330 may be performed in accordance with examples as described herein. In some implementations, aspects of the operations of 1330 may be performed by a device as described with reference to FIG. 1.

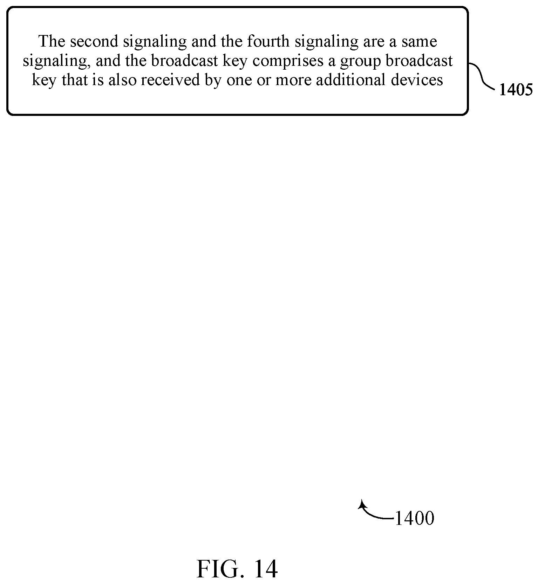

FIG. 14 illustrates a flowchart of a method 1400 that supports protecting broadcast ranging and positioning messages over sidelink interface in accordance with aspects of the present disclosure. The operations of the method 1400 may be implemented by a device or its components as described herein. For example, the operations of the method 1400 may be performed by a UE 104 as described with reference to FIGs. 1 through 5. In some implementations, the device may execute a set of instructions to control the function elements of the device to perform the described functions. Additionally, or alternatively, the device may perform aspects of the described functions using special-purpose hardware.

At 1405, the method may include the second signaling and the fourth signaling are a same signaling, and the broadcast key comprises a group broadcast key that is also received by one or more additional devices. The operations of 1405 may be performed in accordance with examples as described herein. In some implementations, aspects of the operations of 1405 may be performed by a device as described with reference to FIG. 1.

It should be noted that the methods described herein describes possible implementations, and that the operations and the steps may be rearranged or otherwise modified and that other implementations are possible. Further, aspects from two or more of the methods may be combined.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor.

Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). Similarly, a list of at least one of A; B; or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on. Further, as used herein, including in the claims, a "set" may include one or more elements.

The terms "transmitting," "receiving," or "communicating," when referring to a network entity, may refer to any portion of a network entity (e.g., a base station, a CU, a DU, a RU) of a RAN communicating with another device (e.g., directly or via one or more other network entities).

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form to avoid obscuring the concepts of the described example.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

## Claims

1. A sidelink positioning key management function, SLPKMF, (210) for wireless communication, the SLPKMF (210) comprising:
at least one memory (406); and
at least one processor (404) coupled with the at least one memory (406) and configured to cause the SLPKMF (210) to:
receive (605), from a first user equipment, UE, (202), a first signaling indicating a request message;
transmit (610), to the first UE (202), a second signaling indicating a response message that includes a group identifier, ID, a group broadcast key and a validity time;
receive (615), from a second UE (204, 206, 208), a third signaling indicating a sidelink broadcast key request; and
transmit (620), to the second UE (204, 206, 208), a fourth signaling indicating a sidelink broadcast key response message that includes the group broadcast key.

2. The SLPKMF (210) of claim 1, wherein the at least one processor (404) is configured to cause the SLPKMF (210) to:
transmit, to a device, a fifth signaling indicating an authorization request message that includes an identity of the first UE (202); and
receive, from the device, a sixth signaling indicating a successful authorization result of the first UE (202).

3. The SLPKMF (210) of claim 1, wherein the at least one processor (404) is configured to cause the SLPKMF (210) to:
assign the group ID to the first UE (202).

4. A method performed by a sidelink positioning key management function, SLPKMF, (210), the method comprising:
receiving (605), from a first user equipment, UE, (202), a first signaling indicating a request message;
transmitting (610), to the first UE (202), a second signaling indicating a response message that includes a group identifier, ID, a group broadcast key and a validity time;
receiving (615), from a second UE (204, 206, 208), a third signaling indicating a sidelink broadcast key request; and
transmitting (620), to the second UE (204, 206, 208), a fourth signaling indicating a sidelink broadcast key response message that includes the group broadcast key.

5. The method of claim 4, comprising:
transmitting, to a device, a fifth signaling indicating an authorization request message that includes an identity of the first UE (202); and
receiving, from the device, a sixth signaling indicating a successful authorization result of the first UE (202).

6. The method of claim 1, comprising:
assigning the group ID to the first UE (202).

7. A user equipment, UE, (202) for wireless communication, the UE (202) comprising:
at least one memory (506); and
at least one processor (504) coupled with the at least one memory (506) and configured to cause the UE (202) to:
transmit (1305), to a sidelink positioning key management function, SLPKMF, (210), a first signaling indicating a request message;
receive (1310), from the SLPKMF (210), a second signaling indicating a response message that includes a group identifier, ID, a group broadcast key and a validity time;
transmit (1315), to a second UE (204, 206, 208), a third signaling indicating a sidelink broadcast message with a requested positioning or ranging action that includes an identity of the UE and the group ID;
establish (1325), with the second UE (204, 206, 208) and using the broadcast key, a protocol for sidelink positioning procedures, SLPP, session; and
receive (1330), from the second UE (204, 206, 208), a fifth signaling indicating a result of the requested positioning or ranging action which is protected with the broadcast key.

8. The UE (202) of claim 7, wherein the broadcast key comprises an individual broadcast key for the UE (202).

9. A method performed by a user equipment, UE, (202) for wireless communication, the method comprising:
transmitting (1305), to a sidelink positioning key management function, SLPKMF, (210), a first signaling indicating a request message;
receiving (1310), from the SLPKMF (210), a second signaling indicating a response message that includes a group identifier, ID, a group broadcast key and a validity time;
transmitting (1315), to a second UE (204, 206, 208), a third signaling indicating a sidelink broadcast message with a requested positioning or ranging action that includes an identity of the UE and the group ID;
establishing (1325), with the second UE (204, 206, 208) and using the broadcast key, a protocol for sidelink positioning procedures, SLPP, session; and
receiving (1330), from the second UE (204, 206, 208), a fifth signaling indicating a result of the requested positioning or ranging action which is protected with the broadcast key.

10. The method of claim 9, wherein the broadcast key comprises an individual broadcast key for the UE (202).

11. A user equipment, UE, (204, 206, 208) for wireless communication, the UE (204, 206, 208) comprising:
at least one memory (506); and
at least one processor (504) coupled with the at least one memory (506) and configured to cause the UE (204, 206, 208) to:
receive (1105), from a first UE (202), a first signaling indicating a sidelink broadcast message with a requested positioning or ranging action that includes an identity of the first UE (202) and a group identifier, ID;
transmit (1110), to a sidelink positioning key management function, SLPKMF, (210), a second signaling indicating a sidelink broadcast key request; and
receive, from the second SLPKMF (210), a third signaling indicating a sidelink broadcast key response message that includes a group broadcast key.

12. The UE (204, 206, 208) of claim 11, wherein the sidelink broadcast key response message includes the group broadcast key in response to the sidelink broadcast key request message being transmitted to the SLPKMF (210) within a validity time as well as the UE (204, 206, 208) and the first UE (202) having the same location identity.

13. A method performed by a user equipment, UE, (204, 206, 208), the method comprising:
receiving (1105), from a first UE (202), a first signaling indicating a sidelink broadcast message with a requested positioning or ranging action that includes an identity of the first UE (202) and a group identifier, ID;
transmitting (1110), to a sidelink positioning key management function, SLPKMF, (210), a second signaling indicating a sidelink broadcast key request; and
receiving, from the second SLPKMF (210), a third signaling indicating a sidelink broadcast key response message that includes a group broadcast key.

14. The method of claim 13, wherein the sidelink broadcast key response message includes the group broadcast key in response to the sidelink broadcast key request message being transmitted to the SLPKMF (210) within a validity time as well as the UE (204, 206, 208) and the first UE (202) having the same location identity.

15. A processor for a user equipment, UE, (202) for wireless communication, the processor (504) being configured to cause the UE (202) to:
transmit (1305), to a sidelink positioning key management function, SLPKMF, (210), a first signaling indicating a request message;
receive (1310), from the SLPKMF (210), a second signaling indicating a response message that includes a group identifier, ID, a group broadcast key and a validity time;
transmit (1315), to a second UE (204, 206, 208), a third signaling indicating a sidelink broadcast message with a requested positioning or ranging action that includes an identity of the UE and the group ID;
establish (1325), with the second UE (204, 206, 208) and using the broadcast key, a protocol for sidelink positioning procedures, SLPP, session; and
receive (1330), from the second UE (204, 206, 208), a fifth signaling indicating a result of the requested positioning or ranging action which is protected with the broadcast key.

## Patentansprüche

1. Sidelink-Positionierungsschlüsselverwaltungsfunktion, SLPKMF, (210) zur drahtlosen Kommunikation, wobei die SLPKMF (210) umfasst:
mindestens einen Speicher (406); und
mindestens einen Prozessor (404), der mit dem mindestens einen Speicher (406) gekoppelt ist und dazu konfiguriert ist, die SLPKMF (210) zu veranlassen zum:
Empfangen (605), von einem ersten Endgerät, UE, (202), einer ersten Signalgebung, die eine Anfragenachricht angibt;
Senden (610), an das erste UE (202), einer zweiten Signalgebung, die eine Antwortnachricht angibt, die eine Gruppenkennung, ID, einen Gruppenrundsendeschlüssel und eine Gültigkeitsdauer umfasst;
Empfangen (615), von einem zweiten UE (204, 206, 208), einer dritten Signalgebung, die eine Anfrage für einen Sidelink-Rundsendeschlüssel angibt; und
Senden (620), an das zweite UE (204, 206, 208), einer vierten Signalgebung, die eine Antwortnachricht für einen Sidelink-Rundsendeschlüssel angibt, die den Gruppenrundsendeschlüssel umfasst.

2. SLPKMF (210) nach Anspruch 1, wobei der mindestens eine Prozessor (404) dazu konfiguriert ist, die SLPKMF (210) zu veranlassen zum:
Senden, an eine Vorrichtung, einer fünften Signalgebung. die eine Autorisierungsanfragenachricht angibt, die eine Identität des ersten UEs (202) umfasst; und
Empfangen, von der Vorrichtung, einer sechsten Signalgebung. die ein Ergebnis einer erfolgreichen Autorisierung des ersten UEs (202) angibt.

3. SLPKMF (210) nach Anspruch 1, wobei der mindestens eine Prozessor (404) dazu konfiguriert ist, die SLPKMF (210) zu veranlassen zum:
Zuweisen der Gruppen-ID zu dem ersten UE (202).

4. Verfahren, das von einer Sidelink-Positionierungsschlüsselverwaltungsfunktion, SLPKMF, (210), ausgeführt wird, wobei das Verfahren umfasst:
Empfangen (605), von einem ersten Endgerät, UE, (202), einer ersten Signalgebung, die eine Anfragenachricht angibt;
Senden (610), an das erste UE (202), einer zweiten Signalgebung, die eine Antwortnachricht angibt, die eine Gruppenkennung, ID, einen Gruppenrundsendeschlüssel und eine Gültigkeitsdauer umfasst;
Empfangen (615), von einem zweiten UE (204, 206, 208), einer dritten Signalgebung, die eine Sidelink-Rundsendeschlüsselanfrage angibt; und
Senden (620), an das zweite UE (204, 206, 208), einer vierten Signalgebung, die eine Antwortnachricht für einen Sidelink-Rundsendeschlüssel angibt, die den Gruppenrundsendeschlüssel umfasst.

5. Verfahren nach Anspruch 4, umfassend:
Senden, an eine Vorrichtung, einer fünften Signalgebung, die eine Autorisierungsanfragenachricht angibt, die eine Identität des ersten UEs (202) umfasst; und
Empfangen, von der Vorrichtung, einer sechsten Signalgebung, die ein Ergebnis einer erfolgreichen Autorisierung des ersten UEs (202) angibt.

6. Verfahren nach Anspruch 1, umfassend:
Zuweisen der Gruppen-ID zu dem ersten UE (202).

7. Endgerät, UE, (202) zur drahtlosen Kommunikation, wobei das UE (202) umfasst:
mindestens einen Speicher (506); und
mindestens einen Prozessor (504), der mit dem mindestens einen Speicher (506) gekoppelt ist und dazu konfiguriert ist, das UE (202) zu veranlassen zum:
Senden (1305), an eine Sidelink-Positionierungsschlüsselverwaltungsfunktion, SLPKMF, (210), einer ersten Signalgebung, die eine Anfragenachricht angibt;
Empfangen (1310), von der SLPKMF (210), einer zweiten Signalgebung, die eine Antwortnachricht angibt, die eine Gruppenkennung, ID, einen Gruppenrundsendeschlüssel und eine Gültigkeitsdauer umfasst;
Senden (1315), an ein zweites UE (204, 206, 208), einer dritten Signalgebung, die eine Sidelink-Rundsendenachricht mit einer angefragten Positionierungs- oder Entfernungsmessaktion angibt, die eine Identität des UE und die Gruppen-ID umfasst;
Ermitteln (1325), mit dem zweiten UE (204, 206, 208) und unter Verwendung des Rundsendeschlüssels, eines Protokolls für eine Sitzung von Sidelink-Positionierungsvorgängen, SLPP; und
Empfangen (1330), von dem zweiten UE (204, 206, 208), einer fünften Signalgebung, die ein Ergebnis der angefragten Positionierungs- oder Entfernungsmessaktion angibt, das mit dem Rundsendeschlüssel geschützt ist.

8. UE (202) nach Anspruch 7, wobei der Rundsendeschlüssel einen einzelnen Rundsendeschlüssel für das UE (202) umfasst.

9. Verfahren, das von einem Endgerät, UE, (202) ausgeführt wird, zur drahtlosen Kommunikation, wobei das Verfahren umfasst:
Senden (1305), an eine Sidelink-Positionierungsschlüsselverwaltungsfunktion, SLPKMF, (210), einer ersten Signalgebung, die eine Anfragenachricht angibt;
Empfangen (1310), von der SLPKMF (210), einer zweiten Signalgebung, die eine Antwortnachricht angibt, die eine Gruppenkennung, ID, einen Gruppenrundsendeschlüssel und eine Gültigkeitsdauer umfasst;
Senden (1315), an ein zweites UE (204, 206, 208), einer dritten Signalgebung, die eine Sidelink-Rundsendenachricht mit einer angefragten Positionierungs- oder Entfernungsmessaktion angibt, die eine Identität des UE und die Gruppen-ID umfasst;
Ermitteln (1325), mit dem zweiten UE (204, 206, 208) und unter Verwendung des Rundsendeschlüssels, eines Protokolls für eine Sitzung von Sidelink-Positionierungsvorgängen, SLPP; und
Empfangen (1330), von dem zweiten UE (204, 206, 208), einer fünften Signalgebung, die ein Ergebnis der angefragten Positionierungs- oder Entfernungsmessaktion angibt, das mit dem Rundsendeschlüssel geschützt ist.

10. Verfahren nach Anspruch 9, wobei der Rundsendeschlüssel einen einzelnen Rundsendeschlüssel für das UE (202) umfasst.

11. Endgerät, UE, (204, 206, 208) zur drahtlosen Kommunikation, wobei das UE (204, 206, 208) umfasst:
mindestens einen Speicher (506); und
mindestens einen Prozessor (504), der mit dem mindestens einen Speicher (506) gekoppelt ist und dazu konfiguriert ist, das UE (204, 206, 208) zu veranlassen zum:
Empfangen (1105), von einem ersten UE (202), einer ersten Signalgebung, die eine Sidelink-Rundsendenachricht mit einer angefragten Positionierungs- oder Entfernungsmessaktion angibt, die eine Identität des ersten UE (202) und eine Gruppenkennung, ID, umfasst;
Senden (1110), an eine Sidelink-Positionierungsschlüsselverwaltungsfunktion, SLPKMF, (210), einer zweiten Signalgebung, die eine Sidelink-Rundsendeschlüsselanfrage angibt; und
Empfangen, von der zweiten SLPKMF (210), einer dritten Signalgebung, die eine Antwortnachricht für einen Sidelink-Rundsendeschlüssel angibt, die einen Gruppenrundsendeschlüssel umfasst.

12. UE (204, 206, 208) nach Anspruch 11, wobei die Antwortnachricht für einen Sidelink-Rundsendeschlüssel den Gruppenrundsendeschlüssel als Reaktion darauf, dass die Anfragenachricht für einen Sidelink-Rundsendeschlüssel innerhalb einer Gültigkeitsdauer an die SLPKMF (210) sowie an das UE (204, 206, 208) gesendet wird, umfasst, und wobei das erste UE (202) die gleiche Standortidentität aufweist.

13. Verfahren, das von einem Endgerät, UE, (204, 206, 208) ausgeführt wird, wobei das Verfahren umfasst:
Empfangen (1105), von einem ersten UE (202), einer ersten Signalgebung, die eine Sidelink-Rundsendenachricht mit einer angefragten Positionierungs- oder Entfernungsmessaktion angibt, die eine Identität des ersten UE (202) und eine Gruppenkennung, ID, umfasst;
Senden (1110), an eine Sidelink-Positionierungsschlüsselverwaltungsfunktion, SLPKMF, (210), einer zweiten Signalgebung, die eine Anfrage für einen Sidelink-Rundsendeschlüssel angibt; und
Empfangen, von der zweiten SLPKMF (210), einer dritten Signalgebung, die eine Antwortnachricht für einen Sidelink-Rundsendeschlüssel angibt, die einen Gruppenrundsendeschlüssel umfasst.

14. Verfahren nach Anspruch 13, wobei die Antwortnachricht für einen Sidelink-Rundsendeschlüssel den Gruppenrundsendeschlüssel als Reaktion darauf, dass die Anfragenachricht für einen Sidelink-Rundsendeschlüssel innerhalb einer Gültigkeitsdauer an die SLPKMF (210) sowie an das UE (204, 206, 208) gesendet wird, umfasst, und wobei das erste UE (202) die gleiche Standortidentität aufweist.

15. Prozessor für ein Endgerät, UE, (202) zur drahtlosen Kommunikation, wobei der Prozessor (504) dazu konfiguriert ist, das UE (202) zu veranlassen zum:
Senden (1305), an eine Sidelink-Positionierungsschlüsselverwaltungsfunktion, SLPKMF, (210), einer ersten Signalgebung, die eine Anfragenachricht angibt;
Empfangen (1310), von der SLPKMF (210), einer zweiten Signalgebung, die eine Antwortnachricht angibt, die eine Gruppenkennung, ID, einen Gruppenrundsendeschlüssel und eine Gültigkeitsdauer umfasst;
Senden (1315), an ein zweites UE (204, 206, 208), einer dritten Signalgebung, die eine Sidelink-Rundsendenachricht mit einer angefragten Positionierungs- oder Entfernungsmessaktion angibt, die eine Identität des UE und die Gruppen-ID umfasst;
Ermitteln (1325), mit dem zweiten UE (204, 206, 208) und unter Verwendung des Rundsendeschlüssels, eines Protokolls für eine Sitzung von Sidelink-Positionierungsvorgängen, SLPP; und
Empfangen (1330), von dem zweiten UE (204, 206, 208), einer fünften Signalgebung, die ein Ergebnis der angefragten Positionierungs- oder Entfernungsmessaktion angibt, das mit dem Rundsendeschlüssel geschützt ist.

## Revendications

1. Fonction de gestion de clé de positionnement de liaison latérale, SLPKMF, (210) pour communications sans fil, la SLPKMF (210) comprenant :
au moins une mémoire (406) ; et
au moins un processeur (404) couplé à ladite au moins une mémoire (406) et configuré pour amener la SLPKMF (210) à :
recevoir (605), d'un premier équipement utilisateur, UE, (202), une première signalisation indiquant un message de demande ;
envoyer (610), au premier UE (202), une deuxième signalisation indiquant un message de réponse qui comprend un identifiant de groupe, ID, une clé de diffusion de groupe et une durée de validité ;
recevoir (615), d'un deuxième UE (204, 206, 208), une troisième signalisation indiquant une demande de clé de diffusion de liaison latérale ; et
envoyer (620), au deuxième UE (204, 206, 208), une quatrième signalisation indiquant un message de réponse de clé de diffusion de liaison latérale qui comprend la clé de diffusion de groupe.

2. SLPKMF (210) selon la revendication 1, dans laquelle ledit au moins un processeur (404) est configuré pour amener la SLPKMF (210) à :
envoyer, à un dispositif, une cinquième signalisation indiquant un message de demande d'autorisation qui comprend une identité du premier UE (202) ; et
recevoir, du dispositif, une sixième signalisation indiquant un résultat d'autorisation réussie du premier UE (202).

3. SLPKMF (210) selon la revendication 1, dans laquelle ledit au moins un processeur (404) est configuré pour amener la SLPKMF (210) à :
attribuer l'ID de groupe au premier UE (202).

4. Procédé, effectué par une fonction de gestion de clé de positionnement de liaison latérale, SLPKMF, (210), le procédé comprenant :
la réception (605), d'un premier équipement utilisateur, UE, (202), d'une première signalisation indiquant un message de demande ;
l'envoi (610), au premier UE (202), d'une deuxième signalisation indiquant un message de réponse qui comprend un identifiant de groupe, ID, une clé de diffusion de groupe et une durée de validité ;
la réception (615), d'un deuxième UE (204, 206, 208), d'une troisième signalisation indiquant une demande de clé de diffusion de liaison latérale ; et
l'envoi (620), au deuxième UE (204, 206, 208), d'une quatrième signalisation indiquant un message de réponse de clé de diffusion de liaison latérale qui comprend la clé de diffusion de groupe.

5. Procédé selon la revendication 4, comprenant :
l'envoi, à un dispositif, d'une cinquième signalisation indiquant un message de demande d'autorisation qui comprend une identité du premier UE (202) ; et
la réception, du dispositif, d'une sixième signalisation indiquant un résultat d'autorisation réussie du premier UE (202).

6. Procédé selon la revendication 1, comprenant :
l'attribution de l'ID de groupe au premier UE (202).

7. Equipement utilisateur, UE, (202) pour communications sans fil, l'UE (202) comprenant :
au moins une mémoire (506) ; et
au moins un processeur (504) couplé à ladite au moins une mémoire (506) et configuré pour amener l'UE (202) à :
envoyer (1305), à une fonction de gestion de clé de positionnement de liaison latérale, SLPKMF, (210), une première signalisation indiquant un message de demande ;
recevoir (1310), de la SLPKMF (210), une deuxième signalisation indiquant un message de réponse qui comprend un identifiant de groupe, ID, une clé de diffusion de groupe et une durée de validité ;
envoyer (1315), à un deuxième UE (204, 206, 208), une troisième signalisation indiquant un message de diffusion de liaison latérale avec une action de positionnement ou de télémétrie demandée qui comprend une identité de l'UE et l'ID de groupe ;
établir (1325), avec le deuxième UE (204, 206, 208) et en utilisant la clé de diffusion, un protocole pour une session de procédures de positionnement de liaison latérale, SLPP ; et
recevoir (1330), du deuxième UE (204, 206, 208), une cinquième signalisation indiquant un résultat de l'action de positionnement ou de télémétrie demandée qui est protégé par la clé de diffusion.

8. UE (202) selon la revendication 7, dans lequel la clé de diffusion comprend une clé de diffusion individuelle pour l'UE (202).

9. Procédé, effectué par un équipement utilisateur, UE, (202) pour communications sans fil, le procédé comprenant :
l'envoi (1305), à une fonction de gestion de clé de positionnement de liaison latérale, SLPKMF, (210), d'une première signalisation indiquant un message de demande ;
la réception (1310), de la SLPKMF (210), d'une deuxième signalisation indiquant un message de réponse qui comprend un identifiant de groupe, ID, une clé de diffusion de groupe et une durée de validité ;
l'envoi (1315), à un deuxième UE (204, 206, 208), d'une troisième signalisation indiquant un message de diffusion de liaison latérale avec une action de positionnement ou de télémétrie demandée qui comprend une identité de l'UE et l'ID de groupe ;
l'établissement (1325), avec le deuxième UE (204, 206, 208) et en utilisant la clé de diffusion, d'un protocole pour une session de procédures de positionnement de liaison latérale, SLPP ; et
la réception (1330), du deuxième UE (204, 206, 208), d'une cinquième signalisation indiquant un résultat de l'action de positionnement ou de télémétrie demandée qui est protégé par clé de diffusion.

10. Procédé selon la revendication 9, dans lequel la clé de diffusion comprend une clé de diffusion individuelle pour l'UE (202).

11. Equipement utilisateur, UE, (204, 206, 208) pour communications sans fil, l'UE (204, 206, 208) comprenant :
au moins une mémoire (506) ; et
au moins un processeur (504) couplé à ladite au moins une mémoire (506) et configuré pour amener l'UE (204, 206, 208) à :
recevoir (1105), d'un premier UE (202), une première signalisation indiquant un message de diffusion de liaison latérale avec une action de positionnement ou de télémétrie demandée qui comprend une identité du premier UE (202) et un identifiant de groupe, ID ;
envoyer (1110), à une fonction de gestion de clé de positionnement de liaison latérale, SLPKMF, (210), une deuxième signalisation indiquant une demande de clé de diffusion de liaison latérale ; et
recevoir, de la deuxième SLPKMF (210), une troisième signalisation indiquant un message de réponse de clé de diffusion de liaison latérale qui comprend une clé de diffusion de groupe.

12. UE (204, 206, 208) selon la revendication 11, dans lequel le message de réponse de clé de diffusion de liaison latérale comprend la clé de diffusion de groupe en réponse au fait que le message de demande de clé de diffusion de liaison latérale est envoyé à la SLPKMF (210) dans une durée de validité ainsi qu'à l'UE (204, 206, 208), et le premier UE (202) ayant la même identité d'emplacement.

13. Procédé, effectué par un équipement utilisateur, UE, (204, 206, 208), le procédé comprenant :
la réception (1105), d'un premier UE (202), d'une première signalisation indiquant un message de diffusion de liaison latérale avec une action de positionnement ou de télémétrie demandée qui comprend une identité du premier UE (202) et un identifiant de groupe, ID ;
l'envoi (1110), à une fonction de gestion de clé de positionnement de liaison latérale, SLPKMF, (210), d'une deuxième signalisation indiquant une demande de clé de diffusion de liaison latérale ; et
la réception, de la deuxième SLPKMF (210), d'une troisième signalisation indiquant un message de réponse de clé de diffusion de liaison latérale qui comprend une clé de diffusion de groupe.

14. Procédé selon la revendication 13, dans lequel le message de réponse de clé de diffusion de liaison latérale comprend la clé de diffusion de groupe en réponse au fait que le message de demande de clé de diffusion de liaison latérale est envoyé à la SLPKMF (210) dans une durée de validité ainsi qu'à l'UE (204, 206, 208), et le premier UE (202) ayant la même identité d'emplacement.

15. Processeur pour un équipement utilisateur, UE, (202) pour communications sans fil, le processeur (504) étant configuré pour amener l'UE (202) à :
envoyer(1305), à une fonction de gestion de clé de positionnement de liaison latérale, SLPKMF, (210), une première signalisation indiquant un message de demande ;
recevoir (1310), de la SLPKMF (210), une deuxième signalisation indiquant un message de réponse qui comprend un identifiant de groupe, ID, une clé de diffusion de groupe et une durée de validité ;
envoyer (1315), à un deuxième UE (204, 206, 208), une troisième signalisation indiquant un message de diffusion de liaison latérale avec une action de positionnement ou de télémétrie demandée qui comprend une identité de l'UE et l'ID de groupe ;
établir (1325), avec le deuxième UE (204, 206, 208) et en utilisant la clé de diffusion, un protocole pour une session de procédures de positionnement de liaison latérale, SLPP ; et
recevoir (1330), du deuxième UE (204, 206, 208), une cinquième signalisation indiquant un résultat de l'action de positionnement ou de télémétrie demandée qui est protégé par la clé de diffusion.
